# EUROPEAN PATENT APPLICATION

(11) **EP 4 340 245 A1**
(43) Date of publication of application: **20.03.2024**
(21) Application number: 22806735.1
(22) Date of filing: 10.05.2022
(51) Int. Cl.: H04B 7/0456, H04L 5/00

(54) **CODEBOOK CONSTRUCTION METHOD AND APPARATUS, COMMUNICATION DEVICE, STORAGE MEDIUM, AND SYSTEM**

(30) Priority: 11.05.2021 CN 202110513688
(71) Applicant: VIVO MOBILE COMMUNICATION CO., LTD., Dongguan, Guangdong 523863 (CN)
(72) Inventor: ZENG, Chaojun, Dongguan, Guangdong 523863 (CN); LI, Can, Dongguan, Guangdong 523863 (CN)
(74) Representative: Conti, Marco
(86) International application number: PCT/CN2022/091939
(87) International publication number: WO 2022/237772

(57) **Abstract**

This application discloses a codebook construction method and apparatus, a communication device, a storage medium, and a system. The codebook construction method includes: constructing a semi-static HARQ-ACK codebook; and transmitting the semi-static HARQ-ACK codebook. The step of constructing a semi-static HARQ-ACK codebook includes any one of the following: performing time domain bundling based on first information after determining a transmission occasion set, and constructing the semi-static HARQ-ACK codebook based on the result of the time domain bundling; and constructing the semi-static HARQ-ACK codebook based on second information and the last time domain resource assignment record in each row of a time domain resource assignment table. The first information is boundaries of transmission occasions in the transmission occasion set or a union of candidate PDSCH reception occasions corresponding to the transmission occasion set. The second information is used to indicate whether there is a conflict between at least one time domain resource assignment record in a first target row of the time domain resource assignment table and semi-static time domain configuration information.

## Description

### CROSS-REFERENCE TO RELATED APPLICATIONS

This application claims priority to Chinese Patent Application No. 202110513688.3, filed in China on May 11, 2021, which is incorporated herein by reference in its entirety.

### TECHNICAL FIELD

This application pertains to the field of communication technologies and specifically relates to a codebook construction method and apparatus, a communication device, a storage medium, and a system.

### BACKGROUND

Currently, to make full use of time domain resources within a carrier, multi-physical downlink shared channel (Multi-Physical Downlink Shared Channel, Multi-PDSCH) scheduling is introduced. Multi-PDSCH scheduling means that multiple PDSCH receptions on a same carrier can be scheduled by a single downlink control information (Downlink Control Information, DCI). For a semi-static hybrid automatic repeat request-acknowledgement (Hybrid Automatic Repeat Request-Acknowledgement, HARQ-ACK) codebook that supports multi-PDSCH scheduling, how the semi-static HARQ-ACK codebook is constructed is an urgent problem to be solved.

### SUMMARY

Embodiments of this application provide a codebook construction method and apparatus, a communication device, a storage medium, and a system, so as to solve the problem that for a semi-static HARQ-ACK codebook that supports multi-PDSCH scheduling, how the semi-static HARQ-ACK codebook is constructed.

According to a first aspect, a codebook construction method is provided, where the codebook construction method includes: constructing, by a user equipment (User Equipment, UE), a semi-static HARQ-ACK codebook; and transmitting, by the UE, the semi-static HARQ-ACK codebook; where the step of constructing, by a user equipment UE, a semi-static HARQ-ACK codebook includes any one of the following: performing, by the UE, time domain bundling based on first information after determining a transmission occasion set, and constructing the semi-static HARQ-ACK codebook based on the result of the time domain bundling; and constructing, by the UE, the semi-static HARQ-ACK codebook based on second information and the last time domain resource assignment record in each row of a time domain resource assignment table. The first information is any one of the following: boundaries of transmission occasions in the transmission occasion set, and a union of candidate PDSCH reception occasions corresponding to the transmission occasion set, where the union of candidate PDSCH reception occasions is a union of candidate PDSCH reception occasions obtained by concatenating, head-to-tail in a preset order, candidate PDSCH reception occasions in candidate PDSCH reception occasion sets corresponding to each transmission occasion in the transmission occasion set. The second information is used to indicate whether there is a conflict between at least one time domain resource assignment record in a first target row of the time domain resource assignment table and semi-static time domain configuration information, where the first target row is any row in the time domain resource assignment table.

According to a second aspect, a codebook construction method is provided, where the codebook construction method includes: receiving, by a network-side device, semi-static HARQ-ACK codebook; where the semi-static HARQ-ACK codebook is constructed based on the result of the time domain bundling; or the semi-static HARQ-ACK codebook is constructed based on second information and the last time domain resource assignment record in each row of a time domain resource assignment table. The result of the time domain bundling is obtained by performing time domain bundling based on first information after determining a transmission occasion set; and the first information is any one of the following: boundaries of transmission occasions in the transmission occasion set, and a union of candidate PDSCH reception occasions corresponding to the transmission occasion set, where the union of candidate PDSCH reception occasions is a union of candidate PDSCH reception occasions obtained by concatenating, head-to-tail in a preset order, candidate PDSCH reception occasions in candidate PDSCH reception occasion sets corresponding to each transmission occasion in the transmission occasion set. The second information is used to indicate whether there is a conflict between at least one time domain resource assignment record in a first target row of the time domain resource assignment table and semi-static time domain configuration information, where the first target row is any row in the time domain resource assignment table.

According to a third aspect, a codebook construction apparatus is provided, where the codebook construction apparatus includes a construction module and a transmitting module. The construction module is configured to construct a semi-static HARQ-ACK codebook. The transmitting module is configured to transmit the semi-static HARQ-ACK codebook. Construction of the semi-static HARQ-ACK codebook specifically includes any one of the following: performing time domain bundling based on first information after determining a transmission occasion set, and constructing the semi-static HARQ-ACK codebook based on the result of the time domain bundling; and constructing the semi-static HARQ-ACK codebook based on second information and the last time domain resource assignment record in each row of a time domain resource assignment table. The first information is any one of the following: boundaries of transmission occasions in the transmission occasion set, and a union of candidate PDSCH reception occasions corresponding to the transmission occasion set, where the union of candidate PDSCH reception occasions is a union of candidate PDSCH reception occasions obtained by concatenating, head-to-tail in a preset order, candidate PDSCH reception occasions in candidate PDSCH reception occasion sets corresponding to each transmission occasion in the transmission occasion set. The second information is used to indicate whether there is a conflict between at least one time domain resource assignment record in a first target row of the time domain resource assignment table and semi-static time domain configuration information, where the first target row is any row in the time domain resource assignment table.

According to a fourth aspect, a codebook construction apparatus is provided, where the codebook construction apparatus includes a receiving module. The receiving module is configured to receive a semi-static HARQ-ACK codebook. The semi-static HARQ-ACK codebook is constructed based on the result of the time domain bundling; or the semi-static HARQ-ACK codebook is constructed based on second information and the last time domain resource assignment record in each row of a time domain resource assignment table. The result of the time domain bundling is obtained by performing time domain bundling based on first information after determining a transmission occasion set; and the first information is any one of the following: boundaries of transmission occasions in the transmission occasion set, and a union of candidate PDSCH reception occasions corresponding to the transmission occasion set, where the union of candidate PDSCH reception occasions is a union of candidate PDSCH reception occasions obtained by concatenating, head-to-tail in a preset order, candidate PDSCH reception occasions in candidate PDSCH reception occasion sets corresponding to each transmission occasion in the transmission occasion set. The second information is used to indicate whether there is a conflict between at least one time domain resource assignment record in a first target row of the time domain resource assignment table and semi-static time domain configuration information, where the first target row is any row in the time domain resource assignment table.

According to a fifth aspect, UE is provided, where the UE includes a processor, a memory, and a program or instructions stored in the memory and capable of running on the processor, and when the program or instructions are executed by the processor, the steps of the method according to the first aspect are implemented.

According to a sixth aspect, a network-side device is provided, where the network-side device includes a processor, a memory, and a program or instructions stored in the memory and capable of running on the processor, and when the program or instructions are executed by the processor, the steps of the method according to the second aspect are implemented.

According to a seventh aspect, UE is provided, including a processor and a communication interface, where the processor is configured to construct a semi-static HARQ-ACK codebook and transmit the semi-static HARQ-ACK codebook. Construction of the semi-static HARQ-ACK codebook specifically includes any one of the following: performing time domain bundling based on first information after determining a transmission occasion set, and constructing the semi-static HARQ-ACK codebook based on the result of the time domain bundling; and constructing the semi-static HARQ-ACK codebook based on second information and the last time domain resource assignment record in each row of a time domain resource assignment table. The first information is any one of the following: boundaries of transmission occasions in the transmission occasion set, and a union of candidate PDSCH reception occasions corresponding to the transmission occasion set, where the union of candidate PDSCH reception occasions is a union of candidate PDSCH reception occasions obtained by concatenating, head-to-tail in a preset order, candidate PDSCH reception occasions in candidate PDSCH reception occasion sets corresponding to each transmission occasion in the transmission occasion set. The second information is used to indicate whether there is a conflict between at least one time domain resource assignment record in a first target row of the time domain resource assignment table and semi-static time domain configuration information, where the first target row is any row in the time domain resource assignment table.

According to an eighth aspect, a network-side device is provided, including a processor and a communication interface, where the processor is configured to receive a semi-static HARQ-ACK codebook; and the semi-static HARQ-ACK codebook is constructed based on the result of the time domain bundling; or the semi-static HARQ-ACK codebook is constructed based on second information and the last time domain resource assignment record in each row of a time domain resource assignment table. The result of the time domain bundling is obtained by performing time domain bundling based on first information after determining a transmission occasion set; and the first information is any one of the following: boundaries of transmission occasions in the transmission occasion set, and a union of candidate PDSCH reception occasions corresponding to the transmission occasion set, where the union of candidate PDSCH reception occasions is a union of candidate PDSCH reception occasions obtained by concatenating, head-to-tail in a preset order, candidate PDSCH reception occasions in candidate PDSCH reception occasion sets corresponding to each transmission occasion in the transmission occasion set. The second information is used to indicate whether there is a conflict between at least one time domain resource assignment record in a first target row of the time domain resource assignment table and semi-static time domain configuration information, where the first target row is any row in the time domain resource assignment table.

According to a ninth aspect, a readable storage medium is provided, where the readable storage medium stores a program or instructions, and when the program or instructions are executed by a processor, the steps of the method according to the first aspect are implemented or the steps of the method according to the second aspect are implemented.

According to a tenth aspect, a chip is provided, where the chip includes a processor and a communication interface, the communication interface is coupled to the processor, and the processor is configured to run a program or instructions to implement the method according to the first aspect or the method according to the second aspect.

According to an eleventh aspect, a computer program/program product is provided, where the computer program/program product is stored in a non-transient storage medium, and the program/program product is executed by at least one processor to implement the steps of the codebook construction method according to the first aspect or the steps of the codebook construction method according to the second aspect.

In the embodiments of this application, for a semi-static HARQ-ACK codebook supporting multi-PDSCH scheduling, when constructing the semi-static HARQ-ACK codebook, the UE can perform time domain bundling based on the boundaries of transmission occasions in the transmission occasion set or the union of candidate PDSCH reception occasions corresponding to the transmission occasion set, so as to implement the construction of the semi-static HARQ-ACK codebook without the need to determine the bundling granularity in advance, avoiding the influence of bundling granularity on determining transmission occasions, improving the generality of the codebook construction process, and reducing the complexity of codebook construction. Alternatively, when constructing the semi-static HARQ-ACK codebook, based on a conflict between a time domain resource assignment record in any row of the time domain resource assignment table and the semi-static time domain configuration information, the UE can construct the semi-static HARQ-ACK codebook based on the last time domain resource assignment record in each row, so as to avoid a case that a required HARQ-ACK bit is not present in the codebook, thus avoiding any influence on HARQ transmission performance or unnecessary constraint on downlink scheduling.

### BRIEF DESCRIPTION OF DRAWINGS

FIG. 1 is a schematic diagram of an architecture of a communication system according to an embodiment of this application;
FIG. 2 is a structural diagram of a codebook construction method according to an embodiment of this application;
FIG. 3 is a first schematic structural diagram of a codebook construction apparatus according to an embodiment of this application;
FIG. 4 is a second schematic structural diagram of a codebook construction apparatus according to an embodiment of this application;
FIG. 5 is a schematic diagram of a hardware structure of a communication device according to an embodiment of this application;
FIG. 6 is a schematic diagram of a hardware structure of UE according to an embodiment of this application; and
FIG. 7 is a schematic diagram of a hardware structure of a network-side device according to an embodiment of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application shall fall within the protection scope of this application.

The terms "first", "second", and the like in the specification and claims of this application are used to distinguish between similar objects rather than to describe a specific order or sequence. It should be understood that the terms used in this way are interchangeable in appropriate circumstances such that the embodiments of this application can be implemented in other orders than the order illustrated or described herein. In addition, "first" and "second" are typically used to distinguish objects of a same type and do not limit quantities of the objects. For example, there may be one or more first objects. In addition, in this specification and claims, "and/or" indicates at least one of the connected objects, and the character "/" generally indicates an "or" relationship between the contextually associated objects.

It should be noted that technologies described in the embodiments of this application are not limited to a long term evolution (Long Term Evolution, LTE)/LTE-Advanced (LTE-Advanced, LTE-A) system, and may also be applied to other wireless communication systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are often used interchangeably, and the technology described herein may be used in the above-mentioned systems and radio technologies as well as other systems and radio technologies. In the following descriptions, a new radio (New Radio, NR) system is described for an illustration purpose, and NR terms are used in most of the following descriptions, although these technologies may also be applied to other applications than an NR system application, for example, the 6th generation (6th Generation, 6G) communication system.

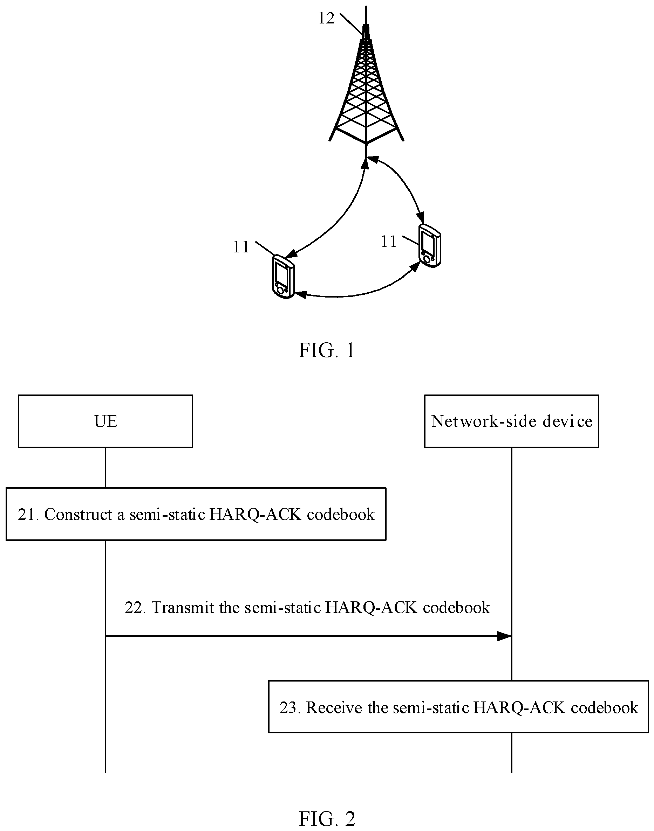

FIG. 1 is a block diagram of a wireless communication system to which the embodiments of this application are applicable. The wireless communication system includes a terminal 11 and a network-side device 12. The terminal 11 may also be referred to as a terminal device or a user equipment (User Equipment, UE). The terminal 11 may be a terminal-side device, such as a mobile phone, a tablet personal computer (Tablet Personal Computer), a laptop computer (Laptop Computer) or notebook computer, a personal digital assistant (Personal Digital Assistant, PDA), a palmtop computer, a netbook, an ultra-mobile personal computer (ultra-mobile personal computer, UMPC), a mobile internet device (Mobile Internet Device, MID), a wearable device (Wearable Device), a vehicular user equipment (VUE), or a pedestrian user equipment (PUE). The wearable device includes a smart watch, a wrist band, earphones, glasses, or the like. It should be noted that a specific type of the terminal 11 is not limited in the embodiments of this application. The network-side device 12 may be a base station or a core network. The base station may be referred to as a NodeB, an evolved NodeB, an access point, a base transceiver station (Base Transceiver Station, BTS), a radio base station, a radio transceiver, a basic service set (Basic Service Set, BSS), an extended service set (Extended Service Set, ESS), a NodeB, an evolved NodeB (eNB), a home NodeB, a home evolved NodeB, a WLAN access point, a Wi-Fi node, a transmission reception point (Transmitting Receiving Point, TRP), or other appropriate terms in the art. Provided that the same technical effects are achieved, the base station is not limited to any specific technical term. It should be noted that in the embodiments of this application, only the base station in the NR system is used as an example, although the specific type of the base station is not limited.

Some concepts and/or terms used in the codebook construction method and apparatus, the communication device, the storage medium, and the system that are provided in the embodiments of this application are explained below.

### 1. Multi-PDSCH scheduling

Currently, it is acknowledged that new sub-carrier spacings (Sub-carrier Spacing, SCS), including 480 kHz and 960 kHz, need to be introduced for new NR deployment bands. For these newly introduced SCSs, monitoring of physical downlink control channels (Physical Downlink Control Channel, PDCCH) needs to be adjusted or enhanced accordingly, for example, avoiding the need for UE to monitor a PDCCH in every slot (slot, with very short duration), so as to reduce implementation complexity for the UE. Accordingly, to make full use of time domain resources within a carrier, multi-PDSCH scheduling and multiple-physical uplink shared channel (Multi-Physical Uplink Shared Channel, Multi-PUSCH) scheduling are introduced.

Multi-PDSCH scheduling means that multiple PDSCH receptions on a same carrier can be scheduled by a single DCI. These PDSCHs do not overlap each other in time domain according to an NR protocol. Currently, multiple PDSCHs being scheduled using single DCI is supported, with each PDSCH limited to a single slot and corresponding to its respective transport block (Transport Block, TB). For a single TB, neither joint rate matching across multiple PDSCHs nor repetition over multiple PDSCHs is allowed.

### 2. Semi-static HARQ-ACK codebook

When organizing a HARQ-ACK bit sequence that needs to be reported at a feedback time point, UE determines a correspondence between each downlink PDSCH reception and a bit in the organized HARQ-ACK bit sequence based on a predefined rule and scheduling of uplink and downlink PDSCH receptions on single/multiple carrier(s) for which HARQ-ACK needs to be reported at that feedback time point. This operation is referred to as construction of a HARQ-ACK codebook (Codebook) or HARQ-ACK codebook scheme. Currently, two HARQ-ACK codebook schemes are used: semi-static codebook (Type-1) and dynamic codebook (Type-2).

The semi-static codebook, constructed from the perspective of possible PDSCH reception occasions, reserves corresponding HARQ-ACK bits for each possible PDSCH reception occasion (determined based on a time domain resource assignment (Time Domain Resource Assignment, TDRA) table in higher-layer configuration) based on a feedback timing (Timing) configuration table (that is, K1 Set in higher-layer configuration) and a HARQ-ACK feedback time point (that is, an uplink slot in which the semi-static codebook is transmitted). If the UE does not actually receive/detect a corresponding PDSCH at a PDSCH reception occasion, a HARQ-ACK bit corresponding to the PDSCH reception occasion is set to non-acknowledgment (Non-Acknowledge, NACK). Otherwise, the corresponding HARQ-ACK bit is set based on a decoding result of that PDSCH.

When multi-PDSCH scheduling is supported, the semi-static HARQ-ACK codebook needs to be enhanced accordingly to support HARQ-ACK feedback corresponding to multi-PDSCH scheduling. For example, it is necessary to ensure that each scheduled PDSCH in multi-PDSCH scheduling has a corresponding HARQ-ACK bit in the HARQ-ACK codebook.

### 3. Time domain bundling (Time Domain Bundling) for HARQ-ACK feedback

Time domain bundling for HARQ-ACK feedback can be understood as that bundling (Bundling, generally using a binary AND operation) is performed on decoding results of PDSCHs received at different time points to form a single fusion decoding result, so as to reduce feedback HARQ-ACK bits. This has been used in a bundling mechanism for HARQ-ACK feedback in time division duplex (Time Division Duplexing, TDD) mode in LTE.

For HARQ-ACK feedback based on a dynamic codebook in multi-PDSCH scheduling, it is proposed to use a time domain bundling mechanism that includes: performing time domain bundling within a range of one or more PDSCHs scheduled using single DCI; or grouping one or more PDSCHs scheduled using single DCI, and then performing time domain bundling within a range of PDSCHs corresponding to a single PDSCH group.

The following describes in detail the codebook construction method provided in the embodiments of this application through some embodiments and application scenarios thereof with reference to the accompanying drawings.

In one scenario, for a semi-static HARQ-ACK codebook that supports multi-PDSCH scheduling, when time domain bundling is applied, a conventional technical solution is to first determine bundling granularity, then map a PDSCH bundling group (Bundling Group) determined based on the bundling granularity to a transmission occasion set, and determine a HARQ-ACK bit sequence corresponding to the transmission occasion set. The bundling granularity adopted in such case significantly affects the determining of a transmission occasion, thus leading to certain complexity and limiting the generality of the codebook construction process.

In the embodiments of this application, for the semi-static HARQ-ACK codebook that supports multi-PDSCH scheduling, after the transmission occasion set is determined, when time domain bundling is applied, a corresponding processing solution is introduced to enhance the generality of the codebook construction process, thus reducing the complexity of codebook construction.

In another scenario, for a semi-static HARQ-ACK codebook that supports multi-PDSCH scheduling, when a candidate PDSCH reception occasion set is determined based on the last time domain resource assignment record in each row of a TDRA table (that is, Option 2 in the following embodiment), a conventional technical solution is as follows: if the last time domain resource assignment record in a row conflicts with semi-static time domain configuration information and this row is ignored during construction of the semi-static codebook, when at least one time domain resource assignment record that does not conflict with the semi-static time domain configuration information exists in this row and downlink scheduling DCI indicates this row, PDSCH(s) (which can be actually transmitted) corresponding to such time domain resource assignment record that does not conflict with the semi-static time domain configuration information has no corresponding HARQ-ACK bit in the semi-static codebook, thus affecting the HARQ transmission performance (when blind retransmission is performed not based on HARQ-ACK feedback, downlink transmission efficiency is reduced; or when feedback is performed relying on another subsequent HARQ-ACK codebook, additional HARQ-ACK feedback delay is introduced), or imposing unnecessary constraint on downlink scheduling.

In the embodiments of this application, for the semi-static HARQ-ACK codebook that supports multi-PDSCH scheduling, when the codebook is constructed based on the last (last) time domain resource assignment record, a different processing method is introduced for the judgment of conflict with the semi-static time domain configuration information, to avoid a case that a required HARQ-ACK bit is not present in the codebook, thus avoiding any influence on HARQ transmission performance or unnecessary constraint on downlink scheduling.

It should be noted that in the following description, a conflict between a time domain resource assignment record and semi-static time domain configuration information is described by using a conflict between the time domain resource assignment record and a semi-static uplink symbol (Semi-static UL symbol) as an example. However, this does not limit the use of the solution of this application when there is a conflict between the time domain resource assignment record and other semi-static time domain configuration information (which results in a physical channel corresponding to the time domain resource assignment record being unable to be actually transmitted in this case).

An embodiment of this application provides a codebook construction method, and FIG. 2 is a flowchart of the codebook construction method according to this embodiment of this application. As shown in FIG. 2, the codebook construction method provided in this embodiment of this application may include the following steps 21 to 23.

Step 21. UE constructs a semi-static HARQ-ACK codebook.

Step 22. The UE transmits the semi-static HARQ-ACK codebook.

The step of UE constructing a semi-static HARQ-ACK codebook includes any one of the following: the UE performs time domain bundling based on first information after determining a transmission occasion set, and constructs the semi-static HARQ-ACK codebook based on the result of the time domain bundling; and the UE constructs the semi-static HARQ-ACK codebook based on second information and the last time domain resource assignment record in each row of a time domain resource assignment table.

The first information is any one of the following: boundaries of transmission occasions in the transmission occasion set, and a union of candidate PDSCH reception occasions corresponding to the transmission occasion set, where the union of candidate PDSCH reception occasions is a union of candidate PDSCH reception occasions obtained by concatenating, head-to-tail in a preset order, candidate PDSCH reception occasions in candidate PDSCH reception occasion sets corresponding to each transmission occasion in the transmission occasion set. The second information is used to indicate whether there is a conflict between at least one time domain resource assignment record in a first target row of the time domain resource assignment table and a semi-static uplink symbol, where the first target row is any row in the time domain resource assignment table.

Step 23. A network-side device receives the semi-static HARQ-ACK codebook.

The semi-static HARQ-ACK codebook is constructed based on the result of the time domain bundling; or the semi-static HARQ-ACK codebook is constructed based on the second information and the last time domain resource assignment record in each row of the time domain resource assignment table.

The result of the time domain bundling is obtained by performing time domain bundling based on the first information after determining the transmission occasion set. The first information is any one of the following: the boundaries of transmission occasions in the transmission occasion set, and the union of candidate PDSCH reception occasions corresponding to the transmission occasion set, the union of candidate PDSCH reception occasions being a union of candidate PDSCH reception occasions obtained by concatenating, head-to-tail in a preset order, candidate PDSCH reception occasions in candidate PDSCH reception occasion sets corresponding to the transmission occasions in the transmission occasion set. The second information is used to indicate whether there is a conflict between at least one time domain resource assignment record in a first target row of the time domain resource assignment table and a semi-static uplink symbol, the first target row being any row in the time domain resource assignment table.

Optionally, in this embodiment of this application, before the network-side device receives the semi-static HARQ-ACK codebook, the method further includes the following step: the network-side device determines length of a HARQ-ACK bit sequence corresponding to the semi-static HARQ-ACK codebook, and a mapping relationship between each HARQ-ACK bit in the HARQ-ACK bit sequence and a candidate PDSCH reception occasion.

The following describes in detail the step of UE constructing a semi-static HARQ-ACK codebook in the codebook construction method provided in this embodiment of this application with reference to specific embodiments.

### Embodiment 1

In this embodiment of this application, the step of UE constructing a semi-static HARQ-ACK codebook may include the following step 201 and step 202.

Step 201. The UE determines a transmission occasion set.

Step 202. The UE performs time domain bundling based on first information after determining the transmission occasion set.

In this embodiment of this application, the first information is any one of the following: boundaries of transmission occasions in the transmission occasion set, and a union of candidate PDSCH reception occasions corresponding to the transmission occasion set, where the union of candidate PDSCH reception occasions is a union of candidate PDSCH reception occasions obtained by concatenating, head-to-tail in a preset order, candidate PDSCH reception occasions in candidate PDSCH reception occasion sets corresponding to each transmission occasion in the transmission occasion set.

In this embodiment of this application, after determining the transmission occasion set, in the case of performing time domain bundling, the UE may perform time domain bundling based on the boundaries of transmission occasions, or perform time domain bundling based on the union of candidate PDSCH reception occasions, allowing for crossing of/without considering the boundaries of transmission occasions.

It should be noted that, as a typical form of representation, the time domain resource assignment record may refer to a start and length indicator value (Start and length indicator value, SLIV). For better understanding of the technical solution in this embodiment of this application, the time domain resource assignment record in this embodiment is described in detail below using SLIV as an example. Certainly, the time domain resource assignment record may also be in other forms, and this application does not provide excessive examples.

It should be noted that an example form of feedback time offset is K1, which is used to indicate an offset of a time domain position of HARQ-ACK feedback relative to a time domain position of PDSCH reception. The offset is measured in time units which may be slot or sub-slot. A feedback time offset mentioned subsequently may be described using K1 as an example, but this does not limit other representation forms of feedback time offset.

It should be noted that a transmission occasion (Occasion) refers to that a transmission occasion is typically associated with a K1 or an effective K1 (Effective K1) and can be understood as a downlink transmission occasion, that can be used independently, within a time unit (or associated with this time unit) corresponding to this K1/effective K1. Different transmission occasions corresponding to this K1/effective K1 can be occupied independently of each other (for example, being occupied at the same time, or one being occupied while another not being occupied). Therefore, corresponding HARQ-ACK bits need to be reserved for each transmission occasion in the constructed semi-static codebook. Generally, each transmission occasion may be further associated with one or more candidate PDSCH reception occasions (or semi-persistent scheduling (Semi-Persistent Scheduling, SPS) PDSCH releases). In this case, when a corresponding HARQ-ACK bit is reserved in the semi-static codebook for a transmission occasion, it is necessary to reserve corresponding HARQ-ACK bits for each candidate PDSCH reception occasion (or SPS PDSCH release) associated with this transmission occasion.

A candidate PDSCH reception occasion (Candidate PDSCH reception) or SPS PDSCH release (the following description is illustrated using a candidate PDSCH reception occasion as an example and can be extended to an SPS PDSCH release) refers to that when a transmission occasion is occupied, this transmission occasion is used for transmitting/receiving a single PDSCH or for single SPS PDSCH release. The single PDSCH or SPS PDSCH release herein can be understood as a candidate PDSCH reception, and there is a one-to-one association between transmission occasions and candidate PDSCH reception occasions. The UE is not allowed to receive any two or more PDSCHs overlapping in time domain on a same serving cell (Serving cell). Therefore, in the semi-static codebook construction process, two or more SLIVs overlapping in time domain (where a single SLIV is in one-to-one correspondence to a single PDSCH) can be mapped to a same candidate PDSCH reception occasion, and a maximum number of transmission occasions that can be independently occupied under the premise that corresponding candidate PDSCH reception occasions do not overlap in time domain are reserved for each K1 (where the transmission occasions are in one-to-one correspondence to the candidate PDSCH reception occasions). With multi-PDSCH scheduling introduced, optionally, each transmission occasion may also correspond to more than one candidate PDSCH reception occasion. In this case, one of the candidate PDSCH reception occasions (for example, the last PDSCH scheduled using single DCI in multi-PDSCH scheduling, which may correspond to the last candidate PDSCH reception occasion) can be associated with this transmission occasion based on a preset rule, and the other candidate PDSCH reception occasions (for example, PDSCHs other than the last PDSCH that are scheduled using single DCI in multi-PDSCH scheduling, which may be in one-to-one correspondence to candidate PDSCH reception occasions other than the last candidate PDSCH reception occasion) can also associated with this transmission occasion following such association relationship. Some or all of the candidate PDSCH reception occasions in a candidate PDSCH reception occasion set corresponding to this transmission occasion are generally occupied at the same time, and each of the occupied candidate PDSCH reception occasions corresponds to a single PDSCH scheduled using single DCI in multi-PDSCH scheduling. Based on the current discussion about semi-static codebook enhancement for multi-PDSCH scheduling, a correspondence between transmission occasions and candidate PDSCH reception occasions in each enhancement option is as follows.

Option 1: For each K1 in an extended K1 set, a transmission occasion subset is determined, and in the case of determining a transmission occasion subset corresponding to a K1, a corresponding operation may be performed based on an SLIV set associated with this K1. In this case, the transmission occasions may be in one-to-one association with the candidate PDSCH reception occasions.

Option 1a: A K1 set is not extended. For each K1 in the K1 set, a transmission occasion subset corresponding to the K1 is determined based on SLIVs configured in each row of the TDRA table. In this case, to ensure that there are corresponding HARQ-ACK bits for each SLIV, generally, there may be a one-to-many association between the transmission occasions and the candidate PDSCH reception occasions.

Option 2: AK1 set is not extended. For each K1 in the K1 set, a transmission occasion subset corresponding to the K1 is determined based on the last SLIV configured in each row of the TDRA table. In this case, all other SLIVs in a same row are associated with a transmission occasion associated with the last SLIV (that is, multiple PDSCHs that do not overlap in time domain are associated with a same transmission occasion; and herein, the SLIVs and PDSCHs are in one-to-one correspondence). To ensure that there are corresponding HARQ-ACK bits for each SLIV, generally, there may be a one-to-many association between the transmission occasions and the candidate PDSCH reception occasions.

Optionally, in a possible implementation of this embodiment of this application, the first information is the boundaries of transmission occasions in the transmission occasion set. The foregoing step 202 may be specifically implemented through the following step 202a.

Step 202a. The UE performs time domain bundling within the candidate PDSCH reception occasion set corresponding to each transmission occasion after determining the transmission occasion set.

Optionally, in this embodiment of this application, in a case that each transmission occasion is associated with at least one candidate PDSCH reception occasion, the UE may perform time domain bundling within the candidate PDSCH reception occasion set corresponding to each transmission occasion. To be specific, this implementation may be applicable to scenarios in which a single transmission occasion is associated with one or more candidate PDSCH reception occasions, and may include Option 1a and Option 2 in the above embodiment.

Optionally, in this embodiment of this application, for each transmission occasion in the transmission occasion set, a candidate PDSCH reception occasion set corresponding to one transmission occasion is a candidate PDSCH reception occasion set formed by at least one candidate PDSCH reception occasion associated with the one transmission occasion.

It can be understood that for the candidate PDSCH reception occasion set corresponding to each transmission occasion, the one or more candidate PDSCH reception occasions associated with each transmission occasion in this case constitute the candidate PDSCH reception occasion set, and time domain bundling is performed for this candidate PDSCH reception occasion set, that is, the following target operation is performed.

Optionally, in this embodiment of this application, the foregoing step 202a may be specifically implemented through the following step 202a1 or step 202a2.

Step 202a1. The UE performs time domain bundling across the candidate PDSCH reception occasion set corresponding to each transmission occasion after determining the transmission occasion set.

Step 202a2. The UE performs time domain bundling cross a candidate PDSCH reception occasion subset in the candidate PDSCH reception occasion set corresponding to each transmission occasion after determining the transmission occasion set.

Optionally, in this embodiment of this application, for each transmission occasion in the transmission occasion set, a candidate PDSCH reception occasion subset corresponding to one transmission occasion includes at least one of the following: at least one first subset and a second subset. Each first subset is a candidate PDSCH reception occasion subset formed by every N candidate PDSCH reception occasions with adjacent or consecutive indexes/numbers in the candidate PDSCH reception occasion set formed by at least one candidate PDSCH reception occasion associated with the one transmission occasion. The second subset is a candidate PDSCH reception occasion subset formed by remaining candidate PDSCH reception occasion(s) at the end of the candidate PDSCH reception occasion set when the number of the remaining candidate PDSCH reception occasion(s) at the end is less than N, N being a positive integer.

It can be understood that the UE constructs a candidate PDSCH reception occasion subset using every N candidate PDSCH reception occasions with adjacent indexes/numbers in the candidate PDSCH reception occasion set formed by one or more candidate PDSCH reception occasion associated with a single transmission occasion, and when the number of remaining candidate PDSCH reception occasion(s) at the end of the candidate PDSCH reception occasion set is less than N, these remaining candidate PDSCH reception occasion(s) constitute a separate candidate PDSCH reception occasion subset. Time domain bundling is performed for each candidate PDSCH reception occasion subset, that is, the following target operation is performed. N may be prescribed by a protocol or configured via higher-layer signaling.

Optionally, in this embodiment of this application, the first information is the boundaries of transmission occasions in the transmission occasion set. The result of the time domain bundling is obtained by performing time domain bundling across a candidate PDSCH reception occasion set corresponding to each transmission occasion after determining the transmission occasion set; or the result of the time domain bundling is obtained by performing time domain bundling across a candidate PDSCH reception occasion subset in the candidate PDSCH reception occasion set corresponding to each transmission occasion after determining the transmission occasion set.

Optionally, in another implementation of this embodiment of this application, the first information is the boundaries of transmission occasions in the transmission occasion set. The foregoing step 202 may be specifically implemented through the following step 202b.

Step 202b. The UE performs time domain bundling across each candidate PDSCH reception occasion associated with each transmission occasion, in each transmission occasion group of at least one transmission occasion group after determining the transmission occasion set.

Optionally, in this embodiment of this application, the at least one transmission occasion group includes at least one of the following: at least one first transmission occasion group and a second transmission occasion group. Each first transmission occasion group is a transmission occasion group formed by every M transmission occasions with adjacent or consecutive indexes/numbers in the transmission occasion set or in a transmission occasion subset. The second transmission occasion group is a transmission occasion group formed by remaining transmission occasion(s) at the end of the transmission occasion set or the transmission occasion subset when the number of the remaining transmission occasion(s) at the end is less than M. The transmission occasion subset is a transmission occasion subset obtained by dividing the transmission occasion set based on a preset rule, and M is a positive integer.

It can be understood that the UE may perform time domain bundling based on the granularity of transmission occasion (a candidate PDSCH reception occasion corresponding to such transmission occasion). The UE constructs a transmission occasion group using every M transmission occasions with adjacent/consecutive indexes/numbers in the transmission occasion set/a transmission occasion subset, and when the number of remaining transmission occasion(s) at the end of the transmission occasion set/the transmission occasion subset is less than M, these remaining transmission occasion(s) constitute a separate transmission occasion group. The UE performs time domain bundling across each candidate PDSCH reception occasion associated with each transmission occasion in each transmission occasion group, that is, performing the following target operation for all candidate PDSCH reception occasions involved in the transmission occasion group. M may be prescribed by a protocol or configured via higher-layer signaling.

In this implementation, this solution does not limit the number of candidate PDSCH reception occasions corresponding to a single transmission occasion and can be applied to Option 1, Option 1a, and Option 2 in the above embodiment, where Option 1 is more suitable (in which case each transmission occasion is associated with only a single candidate PDSCH reception occasion).

Optionally, in this embodiment of this application, the transmission occasion subset may specifically be a transmission occasion subset obtained by dividing the transmission occasion set based on a K1 or an effective K1. Certainly, the transmission occasion subset may also be obtained in other division manners, which is not limited in this embodiment of this application.

Optionally, in this embodiment of this application, the at least one transmission occasion group is obtained in a case that crossing boundaries of the transmission occasion subset(s) is allowed, and the at least one transmission occasion group is one or more transmission occasion groups obtained by splitting the transmission occasion set based on M.

Optionally, in this embodiment of this application, the at least one transmission occasion group is obtained in a case that crossing boundaries of the transmission occasion subset(s) is not allowed, and the at least one transmission occasion group is one or more transmission occasion groups obtained by splitting a transmission occasion subset in the transmission occasion set based on M.

It can be understood that in the above process of obtaining the transmission occasion groups through division, it may also be considered whether crossing a boundary of a transmission occasion subset corresponding to a K1 or an effective K1 is allowed, and accordingly, one of the following manners may be used.

Manner 1: The transmission occasion group can cross a boundary of a transmission occasion subset corresponding to a K1 or an effective K1.

In Manner 1, the UE splits a transmission occasion set corresponding to a serving cell (Serving cell) into one or more transmission occasion groups based on M.

Manner 2: The transmission occasion group cannot cross a boundary of a transmission occasion subset corresponding to a K1 or an effective K1.

In Manner 2, the UE splits a transmission occasion subset, in a transmission occasion set corresponding to a serving cell, corresponding to the K1 or effective K1 into one or more transmission occasion groups.

Optionally, in this embodiment of this application, the first information is the boundaries of transmission occasions in the transmission occasion set. The result of the time domain bundling is obtained by performing time domain bundling across each candidate PDSCH reception occasion associated with each transmission occasion, in each transmission occasion group of at least one transmission occasion group after determining the transmission occasion set.

In this embodiment of this application, when determining the candidate PDSCH reception occasion group for which time domain bundling is performed (as a bundling group), a range for performing time domain bundling may be limited to a range of a candidate PDSCH reception occasion set corresponding to a transmission occasion based on the candidate PDSCH reception occasion set corresponding to each transmission occasion; or time domain bundling may be performed based on the granularity of transmission occasion (a candidate PDSCH reception occasion set corresponding to such transmission occasion).

Optionally, in still another possible implementation of this embodiment of this application, the first information is the union of candidate PDSCH reception occasions corresponding to the transmission occasion set. The foregoing step 202 may be specifically implemented through the following step 202c.

Step 202c. The UE performs time domain bundling across all candidate PDSCH reception occasions, in each candidate PDSCH reception occasion group of at least one candidate PDSCH reception occasion group after determining the transmission occasion set.

Optionally, in this embodiment of this application, the at least one candidate PDSCH reception occasion group includes at least one of the following: at least one first candidate PDSCH reception occasion group and a second candidate PDSCH reception occasion group. Each first candidate PDSCH reception occasion group is a candidate PDSCH reception occasion group formed by every L candidate PDSCH reception occasions with adjacent or consecutive indexes/numbers in the union of candidate PDSCH reception occasions. The second candidate PDSCH reception occasion group is a candidate PDSCH reception occasion group formed by remaining candidate PDSCH reception occasion(s) at the end of the union of candidate PDSCH reception occasions when the number of the remaining candidate PDSCH reception occasion(s) at the end is less than L, L being a positive integer.

It can be understood that the UE may perform time domain bundling based on a candidate PDSCH reception occasion, allowing for crossing of/without considering the boundaries of transmission occasions. The UE may concatenate, head-to-tail in a preset order, candidate PDSCH reception occasions in candidate PDSCH reception occasion sets corresponding to transmission occasions in a transmission occasion set corresponding to a serving cell, to obtain a union of candidate PDSCH reception occasions, and construct a candidate PDSCH reception occasion group using every L candidate PDSCH reception occasions with adjacent/consecutive indexes/numbers in the union of candidate PDSCH reception occasions; and when the number of remaining candidate PDSCH reception occasion(s) at the end of the union is less than L, these remaining candidate PDSCH reception occasion(s) constitute a separate candidate PDSCH reception occasion group. The UE performs time domain bundling across all candidate PDSCH reception occasions in each candidate PDSCH reception occasion group, that is, performing the following target operation. L may be prescribed by a protocol or configured via higher-layer signaling.

Optionally, in this embodiment of this application, the first information is the union of candidate PDSCH reception occasions corresponding to the transmission occasion set. The result of the time domain bundling is obtained by performing time domain bundling across all candidate PDSCH reception occasions, in each candidate PDSCH reception occasion group of at least one candidate PDSCH reception occasion group after determining the transmission occasion set.

In this embodiment of this application, the above-mentioned target operation is: performing time domain bundling across at least one candidate PDSCH reception occasion. Among the at least one candidate PDSCH reception occasion, PDSCH(s) corresponding to 0, 1, or more candidate PDSCH reception occasions are actually transmitted, and PDSCH(s) corresponding to remaining candidate PDSCH reception occasion(s) are not actually transmitted.

It should be noted that each candidate PDSCH reception occasion may be mapped to one or more SLIVs/PDSCHs. In this case, as long as one of the mapped SLIVs/PDSCHs is actually transmitted, a PDSCH corresponding to this candidate PDSCH reception occasion is considered as having been actually transmitted. The UE may determine, based on downlink scheduling DCI detection and/or configured SPS PDSCH reception, whether a mapped SLIV/PDSCH is actually transmitted. For example, for downlink dynamic scheduling, if the UE has detected that an SLIV in a row of a TDRA table indicated by downlink scheduling DCI corresponds to this mapped SLIV/PDSCH (that is, the SLIVs take a same value and are located in a same DL slot, and corresponding HARQ-ACK is reported in the currently constructed semi-static codebook), the UE considers that this SLIV/PDSCH is actually transmitted; and for downlink SPS, if the UE determines, based on a semi-statically configured downlink grant (DL grant) configured semi-statically, that an SLIV corresponding to an SPS PDSCH corresponds to this mapped SLIV/PDSCH, the UE considers that this SLIV/PDSCH is actually transmitted (optionally, when the UE needs to monitor a skipped SPS PDSCH, if the UE considers that this SPS PDSCH is not skipped, the UE considers that this SLIV/PDSCH is actually transmitted).

It can be understood that each candidate PDSCH reception occasion has at most one mapped SLIV/PDSCH that is actually transmitted. When a PDSCH corresponding to a candidate PDSCH reception occasion is actually transmitted, a decoding result corresponding to an SLIV/PDSCH that is mapped to this candidate PDSCH reception occasion and actually transmitted is used as an input to the time domain bundling operation.

Bundling mode 1. A candidate PDSCH reception occasion that is not actually transmitted is included in the time domain bundling operation. In this case, each of the at least one candidate PDSCH reception occasion participates in the time domain bundling operation; and a decoding result corresponding to the candidate PDSCH reception occasion that is not actually transmitted may be assumed to be NACK or ACK.

Further, to avoid the influence of the candidate PDSCH reception occasion that is not actually transmitted on a HARQ-ACK feedback, in the case of binary AND, the decoding result corresponding to the candidate PDSCH reception occasion that is not actually transmitted may be assumed to be ACK; or in the case of binary OR, the decoding result corresponding to the candidate PDSCH reception occasion that is not actually transmitted may be assumed to be NACK.

Bundling mode 2. A candidate PDSCH reception occasion that is not actually transmitted is excluded from the time domain bundling operation. In this case, only each actually transmitted candidate PDSCH reception occasion in the at least one candidate PDSCH reception occasion participates in the time domain bundling operation.

For each candidate PDSCH reception occasion that is included in the scope of the time domain bundling operation, HARQ-ACK information corresponding to a decoding result thereof is compressed/packetized into one or two HARQ-ACK bits and included in the HARQ-ACK codebook for transmission.

The time domain bundling can be understood as follows: binary AND or binary OR is performed on decoding results of codewords corresponding to two or more candidate PDSCH reception occasions to obtain a fusion decoding result corresponding to the codewords (which can be represented by 1 bit); and when transmission using dual codewords is configured, each codeword corresponds to a respective fusion decoding result, and a further operation can be performed based on a particular bundling configuration.

If only one candidate PDSCH reception occasion is included in the scope of the time domain bundling operation, the corresponding HARQ-ACK bit in the HARQ-ACK codebook is set directly using a decoding result corresponding to this candidate PDSCH reception occasion. If no candidate PDSCH reception occasion is included in the time domain bundling operation (for example, bundling mode 2 is used and none of the candidate PDSCH reception occasions is actually transmitted), the corresponding HARQ-ACK bit in the HARQ-ACK codebook may be directly set to NACK.

It should be noted that the number of candidate PDSCH reception occasions associated with each transmission occasion may vary. When the semi-static codebook involves a plurality of serving cells, the above selected solution/manner may be executed separately for each serving cell (the above transmission occasion set can be understood as specific to a serving cell), and then execution outputs of the serving cells are concatenated in a preset manner, for example, concatenated in ascending order of serving cell indexes.

Optionally, in this embodiment of this application, the foregoing step 202 may be specifically implemented through the following step 202d or step 202e.

Step 202d. In a case that after determining the transmission occasion set, for at least one candidate PDSCH reception occasion corresponding to the transmission occasion set, actual transmission of PDSCH(s) corresponding to K candidate PDSCH reception occasion(s) in the at least one candidate PDSCH reception occasion is performed, and actual transmission of PDSCH(s) corresponding to P candidate PDSCH reception occasion(s) is not performed, the UE performs time domain bundling across the K candidate PDSCH reception occasion(s) and the P candidate PDSCH reception occasion(s).

In this embodiment of this application, the P candidate PDSCH reception occasion(s) are candidate PDSCH reception occasion(s) in the at least one candidate PDSCH reception occasion other than the K candidate PDSCH reception occasion(s), K being an integer, and P being an integer.

Optionally, in this embodiment of this application, in the case that the UE performs time domain bundling across the K candidate PDSCH reception occasion(s) and the P candidate PDSCH reception occasion(s), a decoding result corresponding to the P candidate PDSCH reception occasion(s) is non-acknowledgment NACK or ACK.

Optionally, in this embodiment of this application, in a case that binary AND is used, the decoding result corresponding to the P candidate PDSCH reception occasion(s) is ACK; or in a case that binary OR is used, the decoding result corresponding to the P candidate PDSCH reception occasion(s) is NACK.

Step 202e. In a case that after determining the transmission occasion set, for at least one candidate PDSCH reception occasion corresponding to the transmission occasion set, actual transmission of PDSCH(s) corresponding to K candidate PDSCH reception occasion(s) in the at least one candidate PDSCH reception occasion is performed, and no actual transmission is performed for PDSCH(s) corresponding to P candidate PDSCH reception occasion(s), the UE performs time domain bundling across the K candidate PDSCH reception occasion(s).

Optionally, in this embodiment of this application, the following step is further included: In the case that the UE performs time domain bundling across the K candidate PDSCH reception occasion(s), target HARQ-ACK information is compressed/packetized into one or two HARQ-ACK bits before being included in the HARQ-ACK codebook for transmission, where the target HARQ-ACK information is HARQ-ACK information corresponding to a decoding result of each of the K candidate PDSCH reception occasions.

Optionally, in this embodiment of this application, the following step is further included: In a case that the K candidate PDSCH reception occasion(s) are one candidate PDSCH reception occasion, the UE sets a corresponding HARQ-ACK bit in the HARQ-ACK codebook using a decoding result corresponding to the one candidate PDSCH reception occasion; or in a case that K is 0, the UE sets a corresponding HARQ-ACK bit in the HARQ-ACK codebook to NACK.

With the codebook construction method in this embodiment of this application, the UE may perform the following operation: performing time domain bundling based on the first information after determining the transmission occasion set, where the first information is any one of the following: the boundaries of the transmission occasions in the transmission occasion set, and the union of candidate PDSCH reception occasions corresponding to the transmission occasion set. In this solution, for a semi-static HARQ-ACK codebook supporting multi-PDSCH scheduling, after determining the transmission occasion set, the UE performs time domain bundling based on the boundaries of transmission occasions in the transmission occasion set or the union of candidate PDSCH reception occasions corresponding to the transmission occasion set, so as to implement the construction of the semi-static HARQ-ACK codebook without determining the bundling granularity in advance. This avoids the influence of bundling granularity on determining transmission occasions, improving the generality of the codebook construction process, and reducing the complexity of codebook construction.

### Embodiment 2

In this embodiment of this application, the step of UE constructing a semi-static HARQ-ACK codebook may include the following step 301 and step 302.

Step 301. The UE determines second information.

Step 302. The UE constructs the semi-static HARQ-ACK codebook based on the second information and the last time domain resource assignment record in each row of a time domain resource assignment table.

In this embodiment of this application, the second information is used to indicate whether there is a conflict between at least one SLIV in a first target row of the time domain resource assignment table and a semi-static uplink symbol, the first target row being any row in the time domain resource assignment table.

Optionally, in this embodiment of this application, the foregoing step 302 may be specifically implemented through the following step 302a, step 302b, or step 302c.

Step 302a. In a case of a conflict between the last SLIV in the first target row and the semi-static uplink symbol, the UE determines that the first target row is a row not used for determining the transmission occasion set, otherwise, the UE determines that the first target row is a row used for determining the transmission occasion set.

Step 302b. In a case of a conflict or no conflict between the last SLIV in the first target row and the semi-static uplink symbol, the UE determines that the first target row is a row used for determining the transmission occasion set.

Step 302c. The UE determines whether the first target row is a row used for determining the transmission occasion set, based on a conflict between each SLIV in the first target row and the semi-static uplink symbol.

It can be understood that in the case of a conflict between the last SLIV in the first target row and the semi-static uplink symbol, the first target row is not used for determining the transmission occasion set, otherwise the first target row is used for determining the transmission occasion set; or the first target row is always used for determining the transmission occasion set; or the UE determines whether the first target row is used for determining the transmission occasion set, based on a conflict between each SLIV in the first target row and the semi-static uplink symbol.

Optionally, in this embodiment of this application, the foregoing step 302c may be specifically implemented through the following step 302c1 or step 302c2.

Step 302c1. In a case of a conflict between at least one SLIV in the first target row and the semi-static uplink symbol, the UE determines that the first target row is a row not used for determining the transmission occasion set.

Step 302c2. In a case of no conflict between at least one SLIV in the first target row and the semi-static uplink symbol, the UE determines that the first target row is a row used for determining the transmission occasion set.

Optionally, in this embodiment of this application, the method further includes the following step: in a case that the first target row is a row used for determining the transmission occasion set, the UE maps a first SLIV in the first target row to a target transmission occasion. The target transmission occasion is a transmission occasion corresponding to the last SLIV in the first target row, and the first SLIV is any SLIV, in the first target row, that has no conflict with the semi-static uplink symbol.

Optionally, in this embodiment of this application, the target transmission occasion corresponds to X candidate PDSCH reception occasions, where X is a maximum value of the number of SLIVs, in a second target row, that have no conflict with the semi-static uplink symbol, the second target row is any row, in the time domain resource assignment table, that corresponds to the target transmission occasion, and X is an integer.

Optionally, in this embodiment of this application, in a case that Q is less than X, Q SLIVs are sequentially in one-to-one correspondence to the first Q or the last Q of the X candidate PDSCH reception occasions, where Q is the number of SLIVs, in a third target row, that have no conflict with the semi-static uplink symbol, the third target row is a row, in the time domain resource assignment table, that corresponds to the target transmission occasion, and Q is an integer.

Optionally, in this embodiment of this application, in a case that X is 0, the target transmission occasion has no corresponding HARQ-ACK bit in the constructed HARQ-ACK codebook.

In this embodiment of this application, the UE may traverse all K1s in a K1 set. For a given K1, the last SLIV is extracted for each row and a transmission occasion subset corresponding to the given K1 is determined using the splitting manner described in the above embodiment, where each last SLIV group corresponds to a single transmission occasion.

Before the given K1 is split, when whether each row conflicts with the semi-static uplink symbol is considered, one of the following methods may be used.

Conflict handling method 1. A conflict between the last SLIV and the semi-static uplink symbol is considered.

When the last SLIV in a row conflicts with the semi-static uplink symbol (that is, they overlap in time domain), the last SLIV and this row are deleted and not involved in a subsequent operation. To be specific, no corresponding transmission occasion is determined for the last SLIV/this row, and there is no corresponding HARQ-ACK bit in the semi-static codebook for the last SLIV/this row.

Conflict handling method 2. A conflict between the last SLIV and the semi-static uplink symbol is not considered.

Optionally, when the number of candidate PDSCH reception occasions associated with a transmission occasion is determined, a conflict between each SLIV in a row and the semi-static uplink symbol may be considered.

Conflict handling method 3. A conflict between each SLIV in any row and the semi-static uplink symbol is considered.

Conflict handling method 3-1. When any SLIV conflicts with the semi-static uplink symbol, delete its row.

Conflict handling method 3-2. When any SLIV does not conflict with the semi-static uplink symbol, retain its row.

After the splitting process is performed to determine a transmission occasion subset corresponding to each K1, each SLIV in each row may correspond to a transmission occasion corresponding to the last SLIV in that row (that is, a transmission occasion corresponding to the last SLIV group in which the last SLIV is located).

For conflict handling method 1, the row in which the last SLIV conflicts with the semi-static uplink symbol is not mapped to any transmission occasion.

For conflict handling method 2, for each row of one to more rows corresponding to a transmission occasion based on the last SLIV, SLIVs, in that row, that do not conflict with the semi-static uplink symbol are checked and form a subset (assuming that the subset size is the number of SLIVs in the subset), and the maximum value of the subset sizes corresponding to each row may be taken as the number of candidate PDSCH reception occasions associated with that transmission occasion.

When a subset size Q corresponding to a row is less than the maximum value of the number of candidate PDSCH reception occasions associated with a corresponding transmission occasion, the first Q or last Q candidate PDSCH reception occasions may be corresponded to. In other words, HARQ-ACK bits corresponding to the Q candidate PDSCH reception occasions in the HARQ-ACK codebook are used.

When the number of candidate PDSCH reception occasions associated with a transmission occasion is 0, there is no corresponding HARQ-ACK bit in the HARQ-ACK codebook for this transmission occasion.

For conflict handling method 3-1, any row in which the last SLIV conflicts with the semi-static uplink symbol is not mapped to any transmission occasion, in which case a scheduling constraint is similar to that in conflict handling method 1.

For conflict handling method 3-2, the handling is basically the same as that in conflict handling method 2, with the difference being that there is no case in which the number of candidate PDSCH reception occasions associated with a transmission occasion is 0.

With the codebook construction method in this embodiment of this application, the UE constructs the semi-static HARQ-ACK codebook based on the second information and the last SLIV in each row of the time domain resource assignment table, where the second information is used to indicate whether there is a conflict between at least one SLIV in the first target row of the time domain resource assignment table and a semi-static uplink symbol. In this solution, for a semi-static HARQ-ACK codebook supporting multi-PDSCH scheduling, the UE constructs the codebook based on a conflict between an SLIV in any row of the time domain resource assignment table and the semi-static uplink symbol and based on the last SLIV in each row, using the last SLIV in each row, so as to avoid a case that a required HARQ-ACK bit is not present in the codebook, thus avoiding any influence on HARQ transmission performance or unnecessary constraint on downlink scheduling.

It should be noted that the codebook construction method according to this embodiment of this application may be executed by UE, a codebook construction apparatus, or a control module for executing the codebook construction method in the codebook construction apparatus. In this embodiment of this application, the codebook construction method being executed by the UE is used as an example to describe the codebook construction method according to the embodiments of this application.

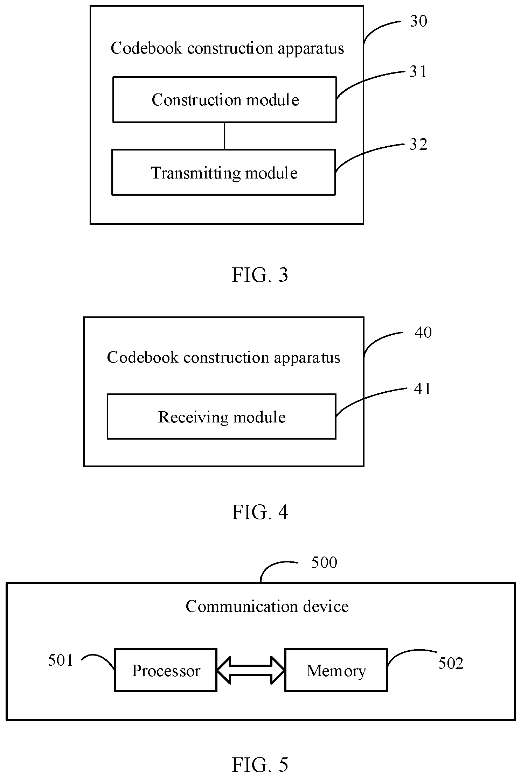

FIG. 3 is a possible schematic structural diagram of a codebook construction apparatus according to an embodiment of this application. As shown in FIG. 3, the codebook construction apparatus 30 may include a construction module 31 and a transmitting module32.

The construction module 31 is configured to construct a semi-static HARQ-ACK codebook. The transmitting module 32 is configured to transmit the semi-static HARQ-ACK codebook. Construction of the semi-static HARQ-ACK codebook specifically includes any one of the following: performing time domain bundling based on first information after determining a transmission occasion set, and constructing the semi-static HARQ-ACK codebook based on the result of the time domain bundling; and constructing the semi-static HARQ-ACK codebook based on second information and the last time domain resource assignment record in each row of a time domain resource assignment table. The first information is any one of the following: boundaries of transmission occasions in the transmission occasion set, and a union of candidate PDSCH reception occasions corresponding to the transmission occasion set, where the union of candidate PDSCH reception occasions is a union of candidate PDSCH reception occasions obtained by concatenating, head-to-tail in a preset order, candidate PDSCH reception occasions in candidate PDSCH reception occasion sets corresponding to each transmission occasion in the transmission occasion set. The second information is used to indicate whether there is a conflict between at least one time domain resource assignment record in a first target row of the time domain resource assignment table and semi-static time domain configuration information, where the first target row is any row in the time domain resource assignment table.

In a possible implementation, the first information is the boundaries of transmission occasions in the transmission occasion set. The construction module 31 is specifically configured to perform time domain bundling within the candidate PDSCH reception occasion set corresponding to each transmission occasion after determining the transmission occasion set.

In a possible implementation, the construction module 31 is specifically configured to: perform time domain bundling across a candidate PDSCH reception occasion set corresponding to each transmission occasion after determining the transmission occasion set; or perform time domain bundling across a candidate PDSCH reception occasion subset in the candidate PDSCH reception occasion set corresponding to each transmission occasion after determining the transmission occasion set.

In a possible implementation, a candidate PDSCH reception occasion set corresponding to one transmission occasion is a candidate PDSCH reception occasion set formed by at least one candidate PDSCH reception occasion associated with the one transmission occasion.

A candidate PDSCH reception occasion subset corresponding to one transmission occasion includes at least one of the following: at least one first subset and a second subset, where each first subset is a candidate PDSCH reception occasion subset formed by every N candidate PDSCH reception occasions with adjacent or consecutive indexes/numbers in the candidate PDSCH reception occasion set formed by at least one candidate PDSCH reception occasion associated with the one transmission occasion; and the second subset is a candidate PDSCH reception occasion subset formed by remaining candidate PDSCH reception occasion(s) at the end of the candidate PDSCH reception occasion set when the number of the remaining candidate PDSCH reception occasion(s) at the end is less than N, N being a positive integer.

In a possible implementation, the first information is the boundaries of transmission occasions in the transmission occasion set. The construction module 31 is specifically configured to perform time domain bundling across each candidate PDSCH reception occasion associated with each transmission occasion, in each transmission occasion group of at least one transmission occasion group after determining the transmission occasion set.

In a possible implementation, the at least one transmission occasion group includes at least one of the following: at least one first transmission occasion group and a second transmission occasion group, where each first transmission occasion group is a transmission occasion group formed by every M transmission occasions with adjacent or consecutive indexes/numbers in the transmission occasion set or in a transmission occasion subset; and the second transmission occasion group is a transmission occasion group formed by remaining transmission occasion(s) at the end of the transmission occasion set or the transmission occasion subset when the number of the remaining transmission occasion(s) at the end is less than M; the transmission occasion subset being a transmission occasion subset obtained by dividing the transmission occasion set based on a preset rule, and M being a positive integer.

In a possible implementation, the at least one transmission occasion group is obtained in a case that crossing boundaries of the transmission occasion subset(s) is allowed, and the at least one transmission occasion group is one or more transmission occasion groups obtained by splitting the transmission occasion set based on M; or
the at least one transmission occasion group is obtained in a case that crossing boundaries of the transmission occasion subset(s) is not allowed, and the at least one transmission occasion group is one or more transmission occasion groups obtained by splitting a transmission occasion subset in the transmission occasion set based on M.

In a possible implementation, the first information is the union of candidate PDSCH reception occasions corresponding to the transmission occasion set. The construction module 31 is specifically configured to perform time domain bundling across all candidate PDSCH reception occasions, in each candidate PDSCH reception occasion group of at least one candidate PDSCH reception occasion group after determining the transmission occasion set.

In a possible implementation, the at least one candidate PDSCH reception occasion group includes at least one of the following: at least one first candidate PDSCH reception occasion group and a second candidate PDSCH reception occasion group, where each first candidate PDSCH reception occasion group is a candidate PDSCH reception occasion group formed by every L candidate PDSCH reception occasions with adjacent or consecutive indexes/numbers in the union of candidate PDSCH reception occasions; and the second candidate PDSCH reception occasion group is a candidate PDSCH reception occasion group formed by remaining candidate PDSCH reception occasion(s) at the end of the union of candidate PDSCH reception occasions when the number of the remaining candidate PDSCH reception occasion(s) at the end is less than L, L being a positive integer.

In a possible implementation, the construction module 31 is specifically configured to: in a case that after determining the transmission occasion set, for at least one candidate PDSCH reception occasion corresponding to the transmission occasion set, actual transmission of PDSCH(s) corresponding to K candidate PDSCH reception occasion(s) in the at least one candidate PDSCH reception occasion is performed, and actual transmission of PDSCH(s) corresponding to P candidate PDSCH reception occasion(s) is not performed,
perform time domain bundling across the K candidate PDSCH reception occasion(s) and the P candidate PDSCH reception occasion(s); or
perform time domain bundling across the K candidate PDSCH reception occasion(s); where
the P candidate PDSCH reception occasion(s) are candidate PDSCH reception occasion(s) in the at least one candidate PDSCH reception occasion other than the K candidate PDSCH reception occasion(s), K being an integer, and P being an integer.

In a possible implementation, in the case that the UE performs time domain bundling across the K candidate PDSCH reception occasion(s) and the P candidate PDSCH reception occasion(s), a decoding result corresponding to the P candidate PDSCH reception occasion(s) is NACK or ACK.

In a possible implementation, in a case that binary AND is used, the decoding result corresponding to the P candidate PDSCH reception occasion(s) is ACK; or in a case that binary OR is used, the decoding result corresponding to the P candidate PDSCH reception occasion(s) is NACK.

In a possible implementation, the codebook construction apparatus further includes a setting module. The setting module is configured to: in a case that the K candidate PDSCH reception occasion(s) are one candidate PDSCH reception occasion, set a corresponding HARQ-ACK bit in the HARQ-ACK codebook using a decoding result corresponding to the one candidate PDSCH reception occasion; or in a case that K is 0, set a corresponding HARQ-ACK bit in the HARQ-ACK codebook to NACK.

In a possible implementation, the construction module 31 is specifically configured to: in a case of a conflict between the last time domain resource assignment record in the first target row and the semi-static time domain configuration information, determine that the first target row is a row not used for determining the transmission occasion set, otherwise, determine that the first target row is a row used for determining the transmission occasion set; or in a case of a conflict or no conflict between the last time domain resource assignment record in the first target row and the semi-static time domain configuration information, determine that the first target row is a row used for determining the transmission occasion set; or determine whether the first target row is a row used for determining the transmission occasion set, based on a conflict between each time domain resource assignment record in the first target row and the semi-static time domain configuration information.

In a possible implementation, the construction module 31 is specifically configured to: in a case of a conflict between at least one time domain resource assignment record in the first target row and the semi-static time domain configuration information, determine that the first target row is a row not used for determining the transmission occasion set; or in a case of no conflict between at least one time domain resource assignment record in the first target row and the semi-static time domain configuration information, determine that the first target row is a row used for determining the transmission occasion set.

In a possible implementation, the codebook construction apparatus further includes a mapping module. The mapping module is configured to: in a case that the first target row is a row used for determining the transmission occasion set, map a first time domain resource assignment record in the first target row to a target transmission occasion. The target transmission occasion is a transmission occasion corresponding to the last time domain resource assignment record in the first target row, and the first time domain resource assignment record is any time domain resource assignment record, in the first target row, that has no conflict with the semi-static time domain configuration information.

In a possible implementation, the target transmission occasion corresponds to X candidate PDSCH reception occasions, where X is a maximum value of the number of time domain resource assignment records, in a second target row, that have no conflict with the semi-static time domain configuration information, the second target row is any row, in the time domain resource assignment table, that corresponds to the target transmission occasion, and X is an integer.

In a possible implementation, in a case that Q is less than X, Q time domain resource assignment records are sequentially in one-to-one correspondence to the first Q or the last Q of the X candidate PDSCH reception occasions, where Q is the number of time domain resource assignment records, in a third target row, that have no conflict with the semi-static time domain configuration information, the third target row is a row, in the time domain resource assignment table, that corresponds to the target transmission occasion, and Q is an integer.

In a possible implementation, in a case that X is 0, the target transmission occasion has no corresponding HARQ-ACK bit in the constructed HARQ-ACK codebook.

With the codebook construction apparatus provided in this embodiment of this application, for a semi-static HARQ-ACK codebook supporting multi-PDSCH scheduling, when constructing the semi-static HARQ-ACK codebook, the apparatus can perform time domain bundling based on the boundaries of transmission occasions in the transmission occasion set or the union of candidate PDSCH reception occasions corresponding to the transmission occasion set, so as to implement the construction of the semi-static HARQ-ACK codebook without the need to determine the bundling granularity in advance, avoiding the influence of bundling granularity on determining transmission occasions, improving the generality of the codebook construction process, and reducing the complexity of codebook construction. Alternatively, when constructing the semi-static HARQ-ACK codebook, based on a conflict between a time domain resource assignment record in any row of the time domain resource assignment table and the semi-static time domain configuration information, the apparatus can construct the semi-static HARQ-ACK codebook based on the last time domain resource assignment record in each row, so as to avoid a case that a required HARQ-ACK bit is not present in the codebook, thus avoiding any influence on HARQ transmission performance or unnecessary constraint on downlink scheduling.

FIG. 4 is a possible schematic structural diagram of a codebook construction apparatus according to an embodiment of this application. As shown in FIG. 4, the codebook construction apparatus 40 may include a receiving module 41.

The receiving module 41 is configured to receive a semi-static HARQ-ACK codebook. The semi-static HARQ-ACK codebook is constructed based on the result of the time domain bundling; or the semi-static HARQ-ACK codebook is constructed based on second information and the last time domain resource assignment record in each row of a time domain resource assignment table. The result of the time domain bundling is obtained by performing time domain bundling based on first information after determining a transmission occasion set; and the first information is any one of the following: boundaries of transmission occasions in the transmission occasion set, and a union of candidate PDSCH reception occasions corresponding to the transmission occasion set, where the union of candidate PDSCH reception occasions is a union of candidate PDSCH reception occasions obtained by concatenating, head-to-tail in a preset order, candidate PDSCH reception occasions in candidate PDSCH reception occasion sets corresponding to each transmission occasions in the transmission occasion set. The second information is used to indicate whether there is a conflict between at least one time domain resource assignment record in a first target row of the time domain resource assignment table and semi-static time domain configuration information, where the first target row is any row in the time domain resource assignment table.

In a possible implementation, the first information is the boundaries of transmission occasions in the transmission occasion set. The result of the time domain bundling is obtained by performing time domain bundling across a candidate PDSCH reception occasion set corresponding to each transmission occasion after determining the transmission occasion set; or the result of the time domain bundling is obtained by performing time domain bundling across a candidate PDSCH reception occasion subset in the candidate PDSCH reception occasion set corresponding to each transmission occasion after determining the transmission occasion set.

In a possible implementation, a candidate PDSCH reception occasion set corresponding to one transmission occasion is a candidate PDSCH reception occasion set formed by at least one candidate PDSCH reception occasion associated with the one transmission occasion.

A candidate PDSCH reception occasion subset corresponding to one transmission occasion includes at least one of the following: at least one first subset and a second subset, where each first subset is a candidate PDSCH reception occasion subset formed by every N candidate PDSCH reception occasions with adjacent or consecutive indexes/numbers in the candidate PDSCH reception occasion set formed by at least one candidate PDSCH reception occasion associated with the one transmission occasion; and the second subset is a candidate PDSCH reception occasion subset formed by remaining candidate PDSCH reception occasion(s) at the end of the candidate PDSCH reception occasion set when the number of the remaining candidate PDSCH reception occasion(s) at the end is less than N, N being a positive integer.

In a possible implementation, the first information is the boundaries of transmission occasions in the transmission occasion set. The result of the time domain bundling is obtained by performing time domain bundling across each candidate PDSCH reception occasion associated with each transmission occasion, in each transmission occasion group of at least one transmission occasion group after determining the transmission occasion set.

In a possible implementation, the at least one transmission occasion group includes at least one of the following: at least one first transmission occasion group and a second transmission occasion group, where each first transmission occasion group is a transmission occasion group formed by every M transmission occasions with adjacent or consecutive indexes/numbers in the transmission occasion set or in a transmission occasion subset; and the second transmission occasion group is a transmission occasion group formed by remaining transmission occasion(s) at the end of the transmission occasion set or the transmission occasion subset when the number of the remaining transmission occasion(s) at the end is less than M; the transmission occasion subset being a transmission occasion subset obtained by dividing the transmission occasion set based on a preset rule, and M being a positive integer.

In a possible implementation, the at least one transmission occasion group is obtained in a case that crossing boundaries of the transmission occasion subset(s) is allowed, and the at least one transmission occasion group is one or more transmission occasion groups obtained by splitting the transmission occasion set based on M; or
the at least one transmission occasion group is obtained in a case that crossing boundaries of the transmission occasion subset(s) is not allowed, and the at least one transmission occasion group is one or more transmission occasion groups obtained by splitting a transmission occasion subset in the transmission occasion set based on M.

In a possible implementation, the first information is the union of candidate PDSCH reception occasions corresponding to the transmission occasion set. The result of the time domain bundling is obtained by performing time domain bundling across all candidate PDSCH reception occasions, in each candidate PDSCH reception occasion group of at least one candidate PDSCH reception occasion group after determining the transmission occasion set.

In a possible implementation, the at least one candidate PDSCH reception occasion group includes at least one of the following: at least one first candidate PDSCH reception occasion group and a second candidate PDSCH reception occasion group, where each first candidate PDSCH reception occasion group is a candidate PDSCH reception occasion group formed by every L candidate PDSCH reception occasions with adjacent or consecutive indexes/numbers in the union of candidate PDSCH reception occasions; and the second candidate PDSCH reception occasion group is a candidate PDSCH reception occasion group formed by remaining candidate PDSCH reception occasion(s) at the end of the union of candidate PDSCH reception occasions when the number of the remaining candidate PDSCH reception occasion(s) at the end is less than L, L being a positive integer.

In a possible implementation, the semi-static HARQ-ACK codebook is constructed based on the second information and the last time domain resource assignment record in each row of the time domain resource assignment table. In a case of a conflict between the last time domain resource assignment record in the first target row and the semi-static time domain configuration information, the first target row is a row not used for determining the transmission occasion set, otherwise, the first target row is a row used for determining the transmission occasion set; or in a case of a conflict or no conflict between the last time domain resource assignment record in the first target row and the semi-static time domain configuration information, the first target row is a row used for determining the transmission occasion set; or whether the first target row is a row used for determining the transmission occasion set is determined based on a conflict between each time domain resource assignment record in the first target row and the semi-static time domain configuration information.

In a possible implementation, in a case of a conflict between at least one time domain resource assignment record in the first target row and the semi-static time domain configuration information, the first target row is a row not used for determining the transmission occasion set;
or
in a case of no conflict between at least one time domain resource assignment record in the first target row and the semi-static time domain configuration information, the first target row is a row used for determining the transmission occasion set.

In a possible implementation, the codebook construction apparatus further includes a determining module. The determining module is configured to: before the receiving module 41 receives the semi-static HARQ-ACK codebook, determine length of a HARQ-ACK bit sequence corresponding to the semi-static HARQ-ACK codebook, and a mapping relationship between each HARQ-ACK bit in the HARQ-ACK bit sequence and a candidate PDSCH reception occasion.

For the codebook construction apparatus provided in this embodiment of this application, the semi-static HARQ-ACK codebook received by the codebook construction apparatus is constructed based on the result of the time domain bundling or constructed based on the second information and the last time domain resource assignment record in each row of the time domain resource assignment table. When the semi-static HARQ-ACK codebook is constructed, time domain bundling is performed based on the boundaries of transmission occasions in the transmission occasion set or the union of candidate PDSCH reception occasions corresponding to the transmission occasion set, so as to implement the construction of the semi-static HARQ-ACK codebook without the need to determine the bundling granularity in advance, avoiding the influence of bundling granularity on determining transmission occasions, improving the generality of the codebook construction process, and reducing the complexity of codebook construction. Alternatively, based on a conflict between a time domain resource assignment record in any row of the time domain resource assignment table and the semi-static time domain configuration information, the semi-static HARQ-ACK codebook is constructed based on the last time domain resource assignment record in each row, so as to avoid a case that a required HARQ-ACK bit is not present in the codebook, thus avoiding any influence on HARQ transmission performance or unnecessary constraint on downlink scheduling.

The codebook construction apparatus in this embodiment of this application may be an apparatus, or an apparatus or UE having an operating system, or may be a component, an integrated circuit, or a chip in the UE. The apparatus or UE may be a mobile terminal or a non-mobile terminal. For example, the mobile terminal may include but is not limited to the types of the UE 11 listed above, and the non-mobile terminal may be a server, a network attached storage (Network Attached Storage, NAS), a personal computer (Personal Computer, PC), a television (Television, TV), a teller machine, a self-service machine or the like, which is not specifically limited in the embodiments of this application.

The codebook construction apparatus provided in this embodiment of this application can implement the processes implemented in the foregoing method embodiments, with the same technical effects achieved. To avoid repetition, details are not described herein again.

Optionally, as shown in FIG. 5, an embodiment of this application further provides a communication device 500 including a processor 501, a memory 502, and a program or instructions stored in the memory 502 and capable of running on the processor 501. For example, when the communication device 500 is UE, the program or instructions are executed by the processor 501 to implement the processes of the foregoing method embodiments, with the same technical effects achieved. In a case that the communication device 500 is a network-side device, when the program or instructions are executed by the processor 501, the processes of the foregoing method embodiments are implemented, with the same beneficial effects achieved. To avoid repetition, details are not described herein again.

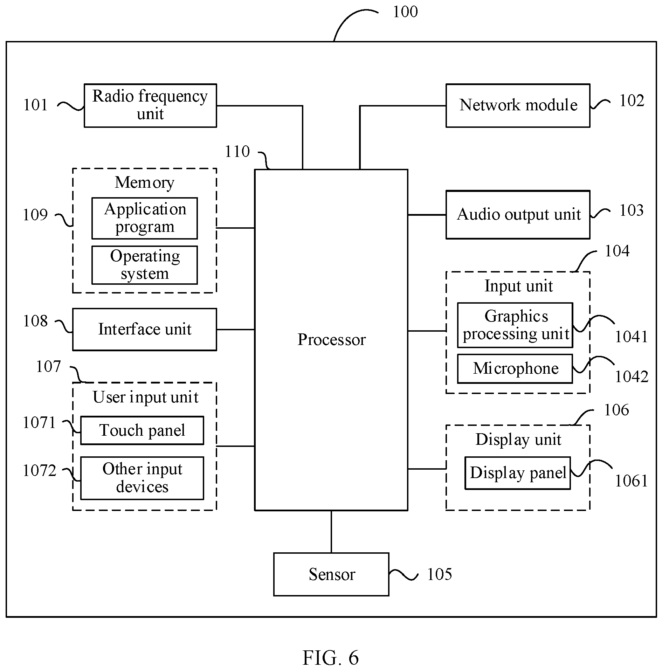

An embodiment of this application further provides UE including a processor and a communication interface, where the processor is configured to construct a semi-static HARQ-ACK codebook, and the communication interface is configured to transmit the semi-static HARQ-ACK codebook. Construction of the semi-static HARQ-ACK codebook specifically includes any one of the following: performing time domain bundling based on first information after determining a transmission occasion set, and constructing the semi-static HARQ-ACK codebook based on the result of the time domain bundling; and constructing the semi-static HARQ-ACK codebook based on second information and the last time domain resource assignment record in each row of a time domain resource assignment table. The first information is any one of the following: boundaries of transmission occasions in the transmission occasion set, and a union of candidate PDSCH reception occasions corresponding to the transmission occasion set, where the union of candidate PDSCH reception occasions is a union of candidate PDSCH reception occasions obtained by concatenating, head-to-tail in a preset order, candidate PDSCH reception occasions in candidate PDSCH reception occasion sets corresponding to each transmission occasion in the transmission occasion set. The second information is used to indicate whether there is a conflict between at least one time domain resource assignment record in a first target row of the time domain resource assignment table and semi-static time domain configuration information, where the first target row is any row in the time domain resource assignment table. This UE embodiment is corresponding to the foregoing UE side method embodiment, and all the implementation processes and implementation manners of the foregoing method embodiment can be applied in this UE embodiment, with the same technical effects achieved. Specifically, FIG. 6 is a schematic diagram of a hardware structure of UE for implementing an embodiment of this application.

The UE 100 includes but is not limited to at least some of components such as a radio frequency unit 101, a network module 102, an audio output unit 103, an input unit 104, a sensor 105, a display unit 106, a user input unit 107, an interface unit 108, a memory 109, and a processor 110.

Those skilled in the art can understand that the UE 100 may further include a power supply (for example, battery) that supplies power to the components. The power supply may be logically connected to the processor 110 via a power management system, so that functions such as charge and discharge management and power consumption management are implemented via the power management system. The structure of the UE shown in FIG. 6 does not constitute any limitation on the UE, and the UE may include more or fewer components than shown in the figure, or combine some of the components, or have different arrangements of the components. Details are not described herein.

It should be understood that in this embodiment of this application, the input unit 104 may include a graphics processing unit (Graphics Processing Unit, GPU) 1041 and a microphone 1042. The graphics processing unit 1041 processes image data of a static picture or a video that is obtained by an image capture apparatus (for example, a camera) in a video capture mode or an image capture mode. The display unit 106 may include a display panel 1061. The display panel 1061 may be configured in a form of a liquid crystal display, an organic light-emitting diode display, or the like. The user input unit 107 includes a touch panel 1071 and other input devices 1072. The touch panel 1071 is also referred to as a touchscreen. The touch panel 1071 may include two parts: a touch detection apparatus and a touch controller. The other input devices 1072 may include but are not limited to a physical keyboard, a function button (for example, a volume control button or a power on/off button), a trackball, a mouse, and a joystick. Details are not described herein.

In this embodiment of this application, the radio frequency unit 101 transmits downlink data received from a network-side device to the processor 110 for processing, and in addition, transmits uplink data to the network-side device. Generally, the radio frequency unit 101 includes but is not limited to an antenna, at least one amplifier, a transceiver, a coupler, a low noise amplifier, and a duplexer.

The memory 109 may be configured to store software programs or instructions and various data. The memory 109 may include a program or instruction storage area and a data storage area. The program or instruction storage area may store an operating system, an application program or instructions required by at least one function (for example, sound play function or image play function), and the like. In addition, the memory 109 may include a high-speed random access memory, and may further include a non-volatile memory, where the non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, for example, at least one disk storage device, flash memory device, or other non-volatile solid-state storage device.

The processor 110 may include one or more processing units. Optionally, the processor 110 may integrate an application processor and a modem processor. The application processor mainly processes an operating system, a user interface, application programs or instructions, and the like. The modem processor mainly processes wireless communication, for example, being a baseband processor. It can be understood that the modem processor may alternatively be not integrated in the processor 110.

The processor 110 is configured to construct a semi-static HARQ-ACK codebook.

The radio frequency unit 101 is configured to transmit the semi-static HARQ-ACK codebook. Construction of the semi-static HARQ-ACK codebook specifically includes any one of the following: performing time domain bundling based on first information after determining a transmission occasion set, and constructing the semi-static HARQ-ACK codebook based on the result of the time domain bundling; and constructing the semi-static HARQ-ACK codebook based on second information and the last time domain resource assignment record in each row of a time domain resource assignment table. The first information is any one of the following: boundaries of transmission occasions in the transmission occasion set, and a union of candidate PDSCH reception occasions corresponding to the transmission occasion set, where the union of candidate PDSCH reception occasions is a union of candidate PDSCH reception occasions obtained by concatenating, head-to-tail in a preset order, candidate PDSCH reception occasions in candidate PDSCH reception occasion sets corresponding to each transmission occasion in the transmission occasion set. The second information is used to indicate whether there is a conflict between at least one time domain resource assignment record in a first target row of the time domain resource assignment table and semi-static time domain configuration information, where the first target row is any row in the time domain resource assignment table.

With the UE provided in this embodiment of this application, for a semi-static HARQ-ACK codebook supporting multi-PDSCH scheduling, when constructing the semi-static HARQ-ACK codebook, the UE can perform time domain bundling based on the boundaries of transmission occasions in the transmission occasion set or the union of candidate PDSCH reception occasions corresponding to the transmission occasion set, so as to implement the construction of the semi-static HARQ-ACK codebook without the need to determine the bundling granularity in advance, avoiding the influence of bundling granularity on determining transmission occasions, improving the generality of the codebook construction process, and reducing the complexity of codebook construction. Alternatively, when constructing the semi-static HARQ-ACK codebook, based on a conflict between a time domain resource assignment record in any row of the time domain resource assignment table and the semi-static time domain configuration information, the UE can construct the semi-static HARQ-ACK codebook based on the last time domain resource assignment record in each row, so as to avoid a case that a required HARQ-ACK bit is not present in the codebook, thus avoiding any influence on HARQ transmission performance or unnecessary constraint on downlink scheduling.

Optionally, in this embodiment of this application, the first information is the boundaries of transmission occasions in the transmission occasion set. The processor 110 is specifically configured to perform time domain bundling within the candidate PDSCH reception occasion set corresponding to each transmission occasion after determining the transmission occasion set.

Optionally, in this embodiment of this application, the processor 110 is specifically configured to: perform time domain bundling across a candidate PDSCH reception occasion set corresponding to each transmission occasion after determining the transmission occasion set; or perform time domain bundling across a candidate PDSCH reception occasion subset in the candidate PDSCH reception occasion set corresponding to each transmission occasion after determining the transmission occasion set.

Optionally, in this embodiment of this application, the first information is the boundaries of transmission occasions in the transmission occasion set. The processor 110 is specifically configured to perform time domain bundling across each candidate PDSCH reception occasion associated with each transmission occasion, in each transmission occasion group of at least one transmission occasion group after determining the transmission occasion set.

Optionally, in this embodiment of this application, the first information is the union of candidate PDSCH reception occasions corresponding to the transmission occasion set. The processor 110 is specifically configured to perform time domain bundling across all candidate PDSCH reception occasions, in each candidate PDSCH reception occasion group of at least one candidate PDSCH reception occasion group after determining the transmission occasion set.

Optionally, in this embodiment of this application, the processor 110 is specifically configured to: in a case that after determining the transmission occasion set, for at least one candidate PDSCH reception occasion corresponding to the transmission occasion set, actual transmission of PDSCH(s) corresponding to K candidate PDSCH reception occasion(s) in the at least one candidate PDSCH reception occasion is performed, and actual transmission of PDSCH(s) corresponding to P candidate PDSCH reception occasion(s) is not performed,
perform time domain bundling across the K candidate PDSCH reception occasion(s) and the P candidate PDSCH reception occasion(s); or
perform time domain bundling across the K candidate PDSCH reception occasion(s); where
the P candidate PDSCH reception occasion(s) are candidate PDSCH reception occasion(s) in the at least one candidate PDSCH reception occasion other than the K candidate PDSCH reception occasion(s), K being an integer, and P being an integer.

Optionally, in this embodiment of this application, the processor 110 is further configured to: in a case that the K candidate PDSCH reception occasion(s) are one candidate PDSCH reception occasion, set a corresponding HARQ-ACK bit in the HARQ-ACK codebook using a decoding result corresponding to the one candidate PDSCH reception occasion; or in a case that K is 0, set a corresponding HARQ-ACK bit in the HARQ-ACK codebook to NACK.

Optionally, in this embodiment of this application, the processor 110 is specifically configured to: in a case of a conflict between the last time domain resource assignment record in the first target row and the semi-static time domain configuration information, determine that the first target row is a row not used for determining the transmission occasion set, otherwise, the UE determines that the first target row is a row used for determining the transmission occasion set; or in a case of a conflict or no conflict between the last time domain resource assignment record in the first target row and the semi-static time domain configuration information, determine that the first target row is a row used for determining the transmission occasion set; or determine whether the first target row is a row used for determining the transmission occasion set, based on a conflict between each time domain resource assignment record in the first target row and the semi-static time domain configuration information.

Optionally, in this embodiment of this application, the processor 110 is specifically configured to: in a case of a conflict between at least one time domain resource assignment record in the first target row and the semi-static time domain configuration information, determine that the first target row is a row not used for determining the transmission occasion set; or in a case of no conflict between at least one time domain resource assignment record in the first target row and the semi-static time domain configuration information, determine that the first target row is a row used for determining the transmission occasion set.

Optionally, in this embodiment of this application, the processor 110 is further configured to: in a case that the first target row is a row used for determining the transmission occasion set, map a first time domain resource assignment record in the first target row to a target transmission occasion. The target transmission occasion is a transmission occasion corresponding to the last time domain resource assignment record in the first target row, and the first time domain resource assignment record is any time domain resource assignment record, in the first target row, that has no conflict with the semi-static time domain configuration information.

The UE provided in this embodiment of this application can implement the processes implemented in the foregoing method embodiments with the same technical effects achieved. To avoid repetition, details are not described herein again.

An embodiment of this application further provides a network-side device including a processor and a communication interface, where the communication interface is used to receive a semi-static HARQ-ACK codebook. The semi-static HARQ-ACK codebook is constructed based on the result of the time domain bundling; or the semi-static HARQ-ACK codebook is constructed based on second information and the last time domain resource assignment record in each row of a time domain resource assignment table. The result of the time domain bundling is obtained by performing time domain bundling based on first information after determining a transmission occasion set; and the first information is any one of the following: boundaries of transmission occasions in the transmission occasion set, and a union of candidate PDSCH reception occasions corresponding to the transmission occasion set, where the union of candidate PDSCH reception occasions is a union of candidate PDSCH reception occasions obtained by concatenating, head-to-tail in a preset order, candidate PDSCH reception occasions in candidate PDSCH reception occasion sets corresponding to each transmission occasion in the transmission occasion set. The second information is used to indicate whether there is a conflict between at least one time domain resource assignment record in a first target row of the time domain resource assignment table and semi-static time domain configuration information, where the first target row is any row in the time domain resource assignment table. This network-side device embodiment is corresponding to the foregoing network-side device method embodiment, and all the implementation processes and implementation manners of the foregoing method embodiment can be applied in this network-side device embodiment, with the same technical effects achieved.

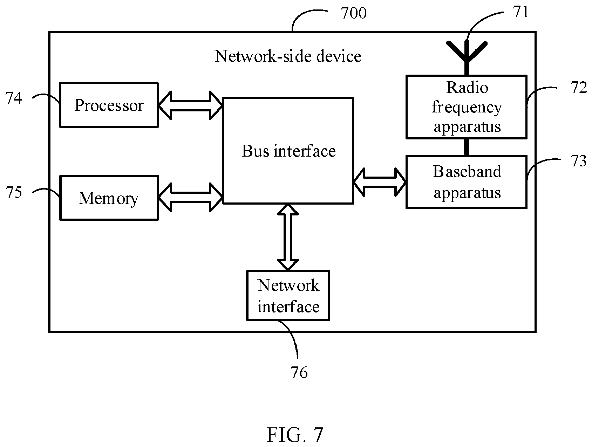

Specifically, an embodiment of this application further provides a network-side device. As shown in FIG. 7, the network-side device 700 includes an antenna 71, a radio frequency apparatus 72, and a baseband apparatus 73. The antenna 71 is connected to the radio frequency apparatus 72. In an uplink direction, the radio frequency apparatus 72 receives information by using the antenna 71, and transmits the received information to the baseband apparatus 73 for processing. In a downlink direction, the baseband apparatus 73 processes to-be-transmitted information, and transmits the information to the radio frequency apparatus 72; and the radio frequency apparatus 72 processes the received information and then transmits the information by using the antenna 71.

The frequency band processing apparatus may be located in the baseband apparatus 73. The method executed by the network-side device in the foregoing embodiments may be implemented in the baseband apparatus 73, and the baseband apparatus 73 includes a processor 74 and a memory 75.

The baseband apparatus 73 may include, for example, at least one baseband board, where multiple chips are disposed on the baseband board. As shown in FIG. 7, one of the chips is, for example, the processor 74, connected to the memory 75, to invoke a program in the memory 75 to perform the operation of the network-side device shown in the foregoing method embodiments.

The baseband apparatus 73 may further include a network interface 76 configured to exchange information with the radio frequency apparatus 72, where the interface is, for example, a common public radio interface (Common Public Radio Interface, CPRI).

Specifically, the network-side device in this embodiment of the present invention further includes: instructions or a program stored in the memory 75 and capable of running on the processor 74. The processor 74 invokes the instructions or program in the memory 75 to perform the method performed by the foregoing modules, with the same technical effects achieved. To avoid repetition, details are not described herein again.

An embodiment of this application further provides a readable storage medium, where the readable storage medium stores a program or instructions, and when the program or instructions are executed by a processor, the processes of the foregoing codebook construction method embodiments are implemented, with the same technical effects achieved. To avoid repetition, details are not described herein again.

The processor is the processor in the UE described in the foregoing embodiment. The readable storage medium includes a computer-readable storage medium, such as a computer read-only memory (Read-Only Memory, ROM), a random access memory (Random Access Memory, RAM), a magnetic disk, or an optical disc.

An embodiment of this application further provides a chip, where the chip includes a processor and a communication interface, the communication interface is coupled to the processor, and the processor is configured to run a program or instructions to implement the processes of the foregoing codebook construction method embodiments, with the same technical effects achieved. To avoid repetition, details are not described herein again.

It should be understood that the chip mentioned in this embodiment of this application may also be referred to as a system-level chip, a system chip, a chip system, a system-on-chip, or the like.

It should be noted that the terms "include", "comprise", or any of their variants are intended to cover a non-exclusive inclusion, such that a process, method, article, or apparatus that includes a series of elements includes not only those elements but also other elements that are not expressly listed, or further includes elements inherent to such process, method, article, or apparatus. Without more constraints, an element preceded by "includes a..." does not preclude the presence of other identical elements in the process, method, article, or apparatus that includes the element. Furthermore, it should be noted that the scope of the method and apparatus in the implementations of this application is not limited to functions being performed in the order shown or discussed, but may further include functions being performed at substantially the same time or in a reverse order, depending on the functions involved. For example, the described method may be performed in an order different from the order described, and steps may be added, omitted, or combined. In addition, features described with reference to some examples may be combined in other examples.

According to the description of the foregoing implementations, persons skilled in the art can clearly understand that the method in the foregoing embodiments may be implemented by software in combination with a necessary general hardware platform. Certainly, the method in the foregoing embodiments may alternatively be implemented by hardware. However, in many cases, the former is a preferred implementation. Based on such an understanding, the technical solutions of this application essentially, or the part contributing to the prior art may be implemented in a form of a computer software product. The computer software product is stored in a storage medium (for example, a ROM/RAM, a magnetic disk, or an optical disc), and includes several instructions for instructing a terminal (which may be a mobile phone, a computer, a server, an air conditioner, a network-side device, or the like) to perform the method described in the embodiments of this application.

The embodiments of this application have been described with reference to the accompanying drawings. However, this application is not limited to the foregoing specific implementations. These specific implementations are merely for illustration rather than limitation. Inspired by this application, persons of ordinary skill in the art may develop many other forms which do not depart from the essence of this application and the protection scope of the claims, and all such forms shall fall within the protection scope of this application.

## Claims

1. A codebook construction method, comprising:
constructing, by a user equipment UE, a semi-static hybrid automatic repeat request-acknowledgement HARQ-ACK codebook; and
transmitting, by the UE, the semi-static HARQ-ACK codebook; wherein
the step of constructing, by a user equipment UE, a semi-static HARQ-ACK codebook comprises any one of the following:
performing, by the UE, time domain bundling based on first information after determining a transmission occasion set, and constructing the semi-static HARQ-ACK codebook based on the result of the time domain bundling; and
constructing, by the UE, the semi-static HARQ-ACK codebook based on second information and the last time domain resource assignment record in each row of a time domain resource assignment table; wherein
the first information is any one of the following: boundaries of transmission occasions in the transmission occasion set, and a union of candidate physical downlink shared channel PDSCH reception occasions corresponding to the transmission occasion set, wherein the union of candidate PDSCH reception occasions is a union of candidate PDSCH reception occasions obtained by concatenating, head-to-tail in a preset order, candidate PDSCH reception occasions in candidate PDSCH reception occasion sets corresponding to each transmission occasion in the transmission occasion set;
and the second information is used to indicate whether there is a conflict between at least one time domain resource assignment record in a first target row of the time domain resource assignment table and semi-static time domain configuration information, wherein the first target row is any row in the time domain resource assignment table.

2. The method according to claim 1, wherein the first information is the boundaries of transmission occasions in the transmission occasion set; and
the performing, by the UE, time domain bundling based on first information after determining a transmission occasion set comprises:
performing, by the UE, time domain bundling within the candidate PDSCH reception occasion set corresponding to each transmission occasion after determining the transmission occasion set.

3. The method according to claim 2, wherein the performing, by the UE, time domain bundling within the candidate PDSCH reception occasion set corresponding to each transmission occasion after determining the transmission occasion set comprises:
performing, by the UE, time domain bundling across the candidate PDSCH reception occasion set corresponding to each transmission occasion after determining the transmission occasion set;
or
performing, by the UE, time domain bundling across a candidate PDSCH reception occasion subset in the candidate PDSCH reception occasion set corresponding to each transmission occasion after determining the transmission occasion set.

4. The method according to claim 3, wherein a candidate PDSCH reception occasion set corresponding to one transmission occasion is a candidate PDSCH reception occasion set formed by at least one candidate PDSCH reception occasion associated with the one transmission occasion; and
a candidate PDSCH reception occasion subset corresponding to one transmission occasion comprises at least one of the following: at least one first subset and a second subset, wherein each first subset is a candidate PDSCH reception occasion subset formed by every N candidate PDSCH reception occasions with adjacent or consecutive indexes/numbers in the candidate PDSCH reception occasion set formed by at least one candidate PDSCH reception occasion associated with the one transmission occasion; and the second subset is a candidate PDSCH reception occasion subset formed by remaining candidate PDSCH reception occasion(s) at the end of the candidate PDSCH reception occasion set when the number of the remaining candidate PDSCH reception occasion(s) at the end is less than N, N being a positive integer.

5. The method according to claim 1, wherein the first information is the boundaries of transmission occasions in the transmission occasion set; and
the performing, by the UE, time domain bundling based on first information after determining a transmission occasion set comprises:
performing, by the UE, time domain bundling across each candidate PDSCH reception occasion associated with each transmission occasion, in each transmission occasion group of at least one transmission occasion group after determining the transmission occasion set.

6. The method according to claim 5, wherein the at least one transmission occasion group comprises at least one of the following: at least one first transmission occasion group and a second transmission occasion group, wherein each first transmission occasion group is a transmission occasion group formed by every M transmission occasions with adjacent or consecutive indexes/numbers in the transmission occasion set or in a transmission occasion subset; and the second transmission occasion group is a transmission occasion group formed by remaining transmission occasion(s) at the end of the transmission occasion set or the transmission occasion subset when the number of the remaining transmission occasion(s) at the end is less than M; the transmission occasion subset being a transmission occasion subset obtained by dividing the transmission occasion set based on a preset rule, and M being a positive integer.

7. The method according to claim 6, wherein the at least one transmission occasion group is obtained in a case that crossing boundaries of the transmission occasion subset(s) is allowed, and the at least one transmission occasion group is one or more transmission occasion groups obtained by splitting the transmission occasion set based on M; or
the at least one transmission occasion group is obtained in a case that crossing boundaries of the transmission occasion subset(s) is not allowed, and the at least one transmission occasion group is one or more transmission occasion groups obtained by splitting a transmission occasion subset in the transmission occasion set based on M.

8. The method according to claim 1, wherein the first information is a union of candidate PDSCH reception occasions corresponding to the transmission occasion set; and
the performing, by the UE, time domain bundling based on first information after determining a transmission occasion set comprises:
performing, by the UE, time domain bundling across all candidate PDSCH reception occasions, in each candidate PDSCH reception occasion group of at least one candidate PDSCH reception occasion group after determining the transmission occasion set.

9. The method according to claim 8, wherein the at least one candidate PDSCH reception occasion group comprises at least one of the following: at least one first candidate PDSCH reception occasion group and a second candidate PDSCH reception occasion group, wherein each first candidate PDSCH reception occasion group is a candidate PDSCH reception occasion group formed by every L candidate PDSCH reception occasions with adjacent or consecutive indexes/numbers in the union of candidate PDSCH reception occasions; and the second candidate PDSCH reception occasion group is a candidate PDSCH reception occasion group formed by remaining candidate PDSCH reception occasion(s) at the end of the union of candidate PDSCH reception occasions when the number of the remaining candidate PDSCH reception occasion(s) at the end is less than L, L being a positive integer.

10. The method according to any one of claims 1 to 9, wherein the performing, by the UE, time domain bundling based on first information after determining a transmission occasion set comprises:
in a case that after determining the transmission occasion set, for at least one candidate PDSCH reception occasion corresponding to the transmission occasion set, the UE performs actual transmission of PDSCH(s) corresponding to K candidate PDSCH reception occasion(s) in the at least one candidate PDSCH reception occasion, and does not perform actual transmission of PDSCH(s) corresponding to P candidate PDSCH reception occasion(s),
performing time domain bundling across the K candidate PDSCH reception occasion(s) and the P candidate PDSCH reception occasion(s); or
performing time domain bundling across the K candidate PDSCH reception occasion(s); wherein
the P candidate PDSCH reception occasion(s) are candidate PDSCH reception occasion(s) in the at least one candidate PDSCH reception occasion other than the K candidate PDSCH reception occasion(s), K being an integer, and P being an integer.

11. The method according to claim 10, wherein in the case that the UE performs time domain bundling across the K candidate PDSCH reception occasion(s) and the P candidate PDSCH reception occasion(s), a decoding result corresponding to the P candidate PDSCH reception occasion(s) is non-acknowledgment NACK or ACK.

12. The method according to claim 11, wherein in a case that binary AND is used, the decoding result corresponding to the P candidate PDSCH reception occasion(s) is ACK; or
in a case that binary OR is used, the decoding result corresponding to the P candidate PDSCH reception occasion(s) is NACK.

13. The method according to claim 10, further comprising:
in a case that the K candidate PDSCH reception occasion(s) are one candidate PDSCH reception occasion, setting, by the UE, a corresponding HARQ-ACK bit in the HARQ-ACK codebook using a decoding result corresponding to the one candidate PDSCH reception occasion; or
in a case that K is 0, setting, by the UE, a corresponding HARQ-ACK bit in the HARQ-ACK codebook to NACK.

14. The method according to claim 1, wherein the constructing, by the UE, the semi-static HARQ-ACK codebook based on second information and the last time domain resource assignment record in each row of a time domain resource assignment table comprises:
in a case of a conflict between the last time domain resource assignment record in the first target row and the semi-static time domain configuration information, determining, by the UE, that the first target row is a row not used for determining the transmission occasion set, otherwise, determining, by the UE, that the first target row is a row used for determining the transmission occasion set;
or
in a case of a conflict or no conflict between the last time domain resource assignment record in the first target row and the semi-static time domain configuration information, determining, by the UE, that the first target row is a row used for determining the transmission occasion set;
or
determining, by the UE, whether the first target row is a row used for determining the transmission occasion set, based on a conflict between each time domain resource assignment record in the first target row and the semi-static time domain configuration information.

15. The method according to claim 14, wherein the determining, by the UE, whether the first target row is a row used for determining the transmission occasion set, based on a conflict between each time domain resource assignment record in the first target row and the semi-static time domain configuration information comprises:
in a case of a conflict between at least one time domain resource assignment record in the first target row and the semi-static time domain configuration information, determining, by the UE, that the first target row is a row not used for determining the transmission occasion set;
or
in a case of no conflict between at least one time domain resource assignment record in the first target row and the semi-static time domain configuration information, determining, by the UE, that the first target row is a row used for determining the transmission occasion set.

16. The method according to claim 14, further comprising:
in a case that the first target row is a row used for determining the transmission occasion set, mapping, by the UE, a first time domain resource assignment record in the first target row to a target transmission occasion; wherein
the target transmission occasion is a transmission occasion corresponding to the last time domain resource assignment record in the first target row, and the first time domain resource assignment record is any time domain resource assignment record, in the first target row, that has no conflict with the semi-static time domain configuration information.

17. The method according to claim 16, wherein the target transmission occasion corresponds to X candidate PDSCH reception occasions, X being a maximum value of the number of time domain resource assignment records, in a second target row, that have no conflict with the semi-static time domain configuration information, the second target row being any row, in the time domain resource assignment table, that corresponds to the target transmission occasion, and X being an integer.

18. The method according to claim 17, wherein in a case that Q is less than X, Q time domain resource assignment records are sequentially in one-to-one correspondence to the first Q or the last Q of the X candidate PDSCH reception occasions, Q being the number of time domain resource assignment records, in a third target row, that have no conflict with the semi-static time domain configuration information, the third target row being a row, in the time domain resource assignment table, that corresponds to the target transmission occasion, and Q being an integer.

19. The method according to claim 17, wherein in a case that X is 0, the target transmission occasion has no corresponding HARQ-ACK bit in the constructed HARQ-ACK codebook.

20. A codebook construction method, comprising:
receiving, by a network-side device, semi-static hybrid automatic repeat request-acknowledgement HARQ-ACK codebook; wherein the semi-static HARQ-ACK codebook is constructed based on the result of the time domain bundling; or the semi-static HARQ-ACK codebook is constructed based on second information and the last time domain resource assignment record in each row of a time domain resource assignment table; wherein
the result of the time domain bundling is obtained by performing time domain bundling based on first information after determining a transmission occasion set; and the first information is any one of the following: boundaries of transmission occasions in the transmission occasion set, and a union of candidate physical downlink shared channel PDSCH reception occasions corresponding to the transmission occasion set, wherein the union of candidate PDSCH reception occasions is a union of candidate PDSCH reception occasions obtained by concatenating, head-to-tail in a preset order, candidate PDSCH reception occasions in candidate PDSCH reception occasion sets corresponding to each transmission occasion in the transmission occasion set; and the second information is used to indicate whether there is a conflict between at least one time domain resource assignment record in a first target row of the time domain resource assignment table and semi-static time domain configuration information, wherein the first target row is any row in the time domain resource assignment table.

21. The method according to claim 20, wherein the first information is the boundaries of transmission occasions in the transmission occasion set; and
the result of the time domain bundling is obtained by performing time domain bundling across a candidate PDSCH reception occasion set corresponding to each transmission occasion after determining the transmission occasion set; or
the result of the time domain bundling is obtained by performing time domain bundling across a candidate PDSCH reception occasion subset in the candidate PDSCH reception occasion set corresponding to each transmission occasion after determining the transmission occasion set.

22. The method according to claim 21, wherein a candidate PDSCH reception occasion set corresponding to one transmission occasion is a candidate PDSCH reception occasion set formed by at least one candidate PDSCH reception occasion associated with the one transmission occasion; and
a candidate PDSCH reception occasion subset corresponding to one transmission occasion comprises at least one of the following: at least one first subset and a second subset, wherein each first subset is a candidate PDSCH reception occasion subset formed by every N candidate PDSCH reception occasions with adjacent or consecutive indexes/numbers in the candidate PDSCH reception occasion set formed by at least one candidate PDSCH reception occasion associated with the one transmission occasion; and the second subset is a candidate PDSCH reception occasion subset formed by remaining candidate PDSCH reception occasion(s) at the end of the candidate PDSCH reception occasion set when the number of the remaining candidate PDSCH reception occasion(s) at the end is less than N, N being a positive integer.

23. The method according to claim 20, wherein the first information is the boundaries of transmission occasions in the transmission occasion set; and
the result of the time domain bundling is obtained by performing time domain bundling across each candidate PDSCH reception occasion associated with each transmission occasion, in each transmission occasion group of at least one transmission occasion group after determining the transmission occasion set.

24. The method according to claim 23, wherein the at least one transmission occasion group comprises at least one of the following: at least one first transmission occasion group and a second transmission occasion group, wherein each first transmission occasion group is a transmission occasion group formed by every M transmission occasions with adjacent or consecutive indexes/numbers in the transmission occasion set or in a transmission occasion subset; and the second transmission occasion group is a transmission occasion group formed by remaining transmission occasion(s) at the end of the transmission occasion set or the transmission occasion subset when the number of the remaining transmission occasion(s) at the end is less than M; the transmission occasion subset being a transmission occasion subset obtained by dividing the transmission occasion set based on a preset rule, and M being a positive integer.

25. The method according to claim 24, wherein the at least one transmission occasion group is obtained in a case that crossing boundaries of the transmission occasion subset(s) is allowed, and the at least one transmission occasion group is one or more transmission occasion groups obtained by splitting the transmission occasion set based on M; or
the at least one transmission occasion group is obtained in a case that crossing a boundaries of the transmission occasion subset(s) is not allowed, and the at least one transmission occasion group is one or more transmission occasion groups obtained by splitting a transmission occasion subset in the transmission occasion set based on M.

26. The method according to claim 20, wherein the first information is a union of candidate PDSCH reception occasions corresponding to the transmission occasion set; and
the result of the time domain bundling is obtained by performing time domain bundling across all candidate PDSCH reception occasions, in each candidate PDSCH reception occasion group of at least one candidate PDSCH reception occasion group after determining the transmission occasion set.

27. The method according to claim 26, wherein the at least one candidate PDSCH reception occasion group comprises at least one of the following: at least one first candidate PDSCH reception occasion group and a second candidate PDSCH reception occasion group, wherein each first candidate PDSCH reception occasion group is a candidate PDSCH reception occasion group formed by every L candidate PDSCH reception occasions with adjacent or consecutive indexes/numbers in the union of candidate PDSCH reception occasions; and the second candidate PDSCH reception occasion group is a candidate PDSCH reception occasion group formed by remaining candidate PDSCH reception occasion(s) at the end of the union of candidate PDSCH reception occasions when the number of the remaining candidate PDSCH reception occasion(s) at the end is less than L, L being a positive integer.

28. The method according to claim 20, wherein the semi-static HARQ-ACK codebook is constructed based on the second information and the last time domain resource assignment record in each row of the time domain resource assignment table; and
in a case of a conflict between the last time domain resource assignment record in the first target row and the semi-static time domain configuration information, the first target row is a row not used for determining the transmission occasion set, otherwise, the first target row is a row used for determining the transmission occasion set;
or
in a case of a conflict or no conflict between the last time domain resource assignment record in the first target row and the semi-static time domain configuration information, the first target row is a row used for determining the transmission occasion set;
or
whether the first target row is a row used for determining the transmission occasion set is determined based on a conflict between each time domain resource assignment record in the first target row and the semi-static time domain configuration information.

29. The method according to claim 28, wherein in a case of a conflict between at least one time domain resource assignment record in the first target row and the semi-static time domain configuration information, the first target row is a row not used for determining the transmission occasion set;
or
in a case of no conflict between at least one time domain resource assignment record in the first target row and the semi-static time domain configuration information, the first target row is a row used for determining the transmission occasion set.

30. The method according to claim 20, wherein before the receiving, by a network-side device, semi-static HARQ-ACK codebook, the method further comprises:
determining, by the network-side device, length of a HARQ-ACK bit sequence corresponding to the semi-static HARQ-ACK codebook, and a mapping relationship between each HARQ-ACK bit in the HARQ-ACK bit sequence and a candidate PDSCH reception occasion.

31. A codebook construction apparatus, comprising a construction module and a transmitting module; wherein
the construction module is configured to construct a semi-static hybrid automatic repeat request-acknowledgement HARQ-ACK codebook; and
the transmitting module is configured to transmit the semi-static HARQ-ACK codebook; wherein
construction of the semi-static HARQ-ACK codebook specifically comprises any one of the following:
performing time domain bundling based on first information after determining a transmission occasion set, and constructing the semi-static HARQ-ACK codebook based on the result of time domain bundling; and
constructing the semi-static HARQ-ACK codebook based on second information and the last time domain resource assignment record in each row of a time domain resource assignment table; wherein
the first information is any one of the following: boundaries of transmission occasions in the transmission occasion set, and a union of candidate physical downlink shared channel PDSCH reception occasions corresponding to the transmission occasion set, wherein the union of candidate PDSCH reception occasions is a union of candidate PDSCH reception occasions obtained by concatenating, head-to-tail in a preset order, candidate PDSCH reception occasions in candidate PDSCH reception occasion sets corresponding to each transmission occasion in the transmission occasion set; and the second information is used to indicate whether there is a conflict between at least one time domain resource assignment record in a first target row of the time domain resource assignment table and semi-static time domain configuration information, wherein the first target row is any row in the time domain resource assignment table.

32. A codebook construction apparatus, comprising a receiving module; wherein
the receiving module is configured to receive a semi-static hybrid automatic repeat request-acknowledgement HARQ-ACK codebook; wherein the semi-static HARQ-ACK codebook is constructed based on the result of the time domain bundling; or the semi-static HARQ-ACK codebook is constructed based on second information and the last time domain resource assignment record in each row of a time domain resource assignment table; wherein
the result of the time domain bundling is obtained by performing time domain bundling based on first information after determining a transmission occasion set; and the first information is any one of the following: boundaries of transmission occasions in the transmission occasion set, and a union of candidate physical downlink shared channel PDSCH reception occasions corresponding to the transmission occasion set, wherein the union of candidate PDSCH reception occasions is a union of candidate PDSCH reception occasions obtained by concatenating, head-to-tail in a preset order, candidate PDSCH reception occasions in candidate PDSCH reception occasion sets corresponding to each transmission occasion in the transmission occasion set; and the second information is used to indicate whether there is a conflict between at least one time domain resource assignment record in a first target row of the time domain resource assignment table and semi-static time domain configuration information, wherein the first target row is any row in the time domain resource assignment table.

33. A user equipment UE, comprising a processor, a memory, and a program or instructions stored in the memory and capable of running on the processor, wherein when the program or instructions are executed by the processor, the steps of the codebook construction method according to any one of claims 1 to 19 are implemented.

34. A network-side device, comprising a processor, a memory, and a program or instructions stored in the memory and capable of running on the processor, wherein when the program or instructions are executed by the processor, the steps of the codebook construction method according to any one of claims 20 to 30 are implemented.

35. A readable storage medium, wherein the readable storage medium stores a program or instructions, and when the program or instructions are executed by a processor, the steps of the codebook construction method according to any one of claims 1 to 19 are implemented, or the steps of the codebook construction method according to any one of claims 20 to 30 are implemented.

36. A communication system, wherein the communication system comprises the codebook construction apparatuses according to claim 31 and claim 32; or
the communication system comprises the user equipment UE according to claim 33 and the network-side device according to claim 34.

37. A computer program product, wherein the program product is executed by at least one processor to implement the codebook construction method according to any one of claims 1 to 19, or the codebook construction method according to any one of claims 20 to 30.

38. A user equipment UE, wherein the UE is configured to perform the codebook construction method according to any one of claims 1 to 19.

39. A network-side device, wherein the network-side device is configured to perform the codebook construction method according to any one of claims 20 to 30.
